(19) 
**Europäisches Patentamt**
**European Patent Office**
**Office européen des brevets**

(11) **EP 4 170 282 A1**

(12) 
# EUROPEAN PATENT APPLICATION
published in accordance with Art. 153(4) EPC

(43) Date of publication:
**26.04.2023 Bulletin 2023/17**

(21) Application number: **21838295.0**

(22) Date of filing: **25.03.2021**

(51) International Patent Classification (IPC):
**G01C 21/00** (2006.01)

(52) Cooperative Patent Classification (CPC):
**G01C 21/00; G01C 21/16; G01C 25/00;**
**G01S 7/497; G01S 17/86**

(86) International application number:
**PCT/CN2021/083032**

(87) International publication number:
**WO 2022/007437 (13.01.2022 Gazette 2022/02)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **04.07.2020 CN 202010636730**

(71) Applicant: **Huawei Technologies Co., Ltd.**
**Longgang District,**
**Shenzhen,**
**Guangdong 518129 (CN)**

(72) Inventors:
• **WANG, Leijie**
**Shenzhen, Guangdong 518129 (CN)**
• **WEN, Feng**
**Shenzhen, Guangdong 518129 (CN)**
• **LIU, Zhenbo**
**Shenzhen, Guangdong 518129 (CN)**
• **JIANG, Rui**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **METHOD FOR CALIBRATING MOUNTING DEVIATION ANGLE BETWEEN SENSORS, COMBINED POSITIONING SYSTEM, AND VEHICLE**

(57)    This application provides a method for calibrating a mounting deviation angle between sensors, an integrated positioning system, and a vehicle. The integrated positioning system includes a plurality of sensors, and mounting positions of the plurality of sensors on the vehicle are different. The calibration method includes: constructing an error model of a mounting deviation angle between the sensors based on attitude information output by the sensors; constructing a system state equation, where a state variable of the system state equation includes the mounting deviation angle; constructing a system observation equation, where an observation member of the system observation equation includes an observation matrix corresponding to the mounting deviation angle determined based on the error model; and performing filtering calculation on the system state equation and the system observation equation, and using, as a calibration result, an estimation result that is of the mounting deviation angle and that is obtained when a filtering calculation result converges. According to the technical solutions of this application, the mounting deviation angle between the sensors can be calibrated online. When a mounting position relationship between the sensors changes, a calibration result can be updated in a timely manner, precision is high, and an operation is simple.

FIG. 5

## Description

This application claims priority to Chinese Patent Application No. 202010636730.6, filed with the China National Intellectual Property Administration on July 4, 2020 and entitled "METHOD FOR CALIBRATING MOUNTING DEVIATION ANGLE BETWEEN SENSORS, INTEGRATED POSITIONING SYSTEM, AND VEHICLE", which is incorporated herein by reference in its entirety.

## TECHNICAL FIELD

This application relates to the field of automated driving technologies, and in particular, to a method for calibrating a mounting deviation angle between sensors, an integrated positioning system, and a vehicle.

## BACKGROUND

A positioning system of a self-driving vehicle is used to determine a position of the vehicle and provide most basic information for a route plan and navigation of the vehicle. Performance of the positioning system directly determines stability and reliability of the self-driving vehicle. Currently, the positioning system is usually an integrated positioning system including a plurality of sensors such as an inertial measurement unit (inertial measurement unit, IMU) used in an inertial navigation system (inertial navigation system, INS), a global navigation satellite system (global navigation satellite system, GNSS) receiver, light detection and ranging (light detection and ranging, LiDAR), an odometer, and a vision sensor.

The sensors in the integrated positioning system are usually mounted in different positions of the vehicle. Therefore, a mounting position relationship between the sensors needs to be calibrated before the sensors are used. For example, a mounting deviation angle between the sensors is calibrated, to accurately perform filtering calculation on a calculation result or a positioning result of the sensors, and improve positioning precision.

Currently, the mounting deviation angle between the sensors is mainly calibrated in an offline calibration method, which depends on a dedicated calibration tool. If the mounting deviation angle between the sensors is calibrated by using some optical means or an indirect calibration manner, an operation is cumbersome, and a calibration time period is long. When the mounting position relationship between the sensors changes because the vehicle vibrates, bumps, or the like for a long period of time, calibration needs to be performed again. If calibration is not performed again, positioning precision of the integrated positioning system is affected.

## SUMMARY

Embodiments of this application provide a method for calibrating a mounting deviation angle between sensors, an integrated positioning system, and a vehicle, to online calibrate a mounting deviation angle between sensors. When a mounting relationship between sensors changes, a calibration result can be updated online, to always ensure positioning precision of the integrated positioning system.

According to a first aspect, an embodiment of this application provides a method for calibrating a mounting deviation angle between sensors. The method is applied to an integrated positioning system, the integrated positioning system includes a plurality of sensors, and mounting positions of the plurality of sensors are different. The method includes: constructing an error model of a mounting deviation angle between the sensors based on attitude information output by the sensors; constructing a system state equation, where a state variable of the system state equation includes the mounting deviation angle; constructing a system observation equation, where an observation member of the system observation equation includes an observation matrix corresponding to the mounting deviation angle determined based on the error model; and performing filtering calculation on the system state equation and the system observation equation, and using, as a calibration result, an estimation result that is of the mounting deviation angle and that is obtained when a filtering calculation result converges.

In the method provided in this embodiment of this application, the mounting deviation angle between the sensors is integrated into a state variable of the integrated positioning system, to calibrate (that is, online calibrate) the mounting deviation angle between the sensors in a running process of a vehicle. A physical structure of the sensors is not considered in a calibration process, and calibration precision is high. In addition, in the method in this embodiment of this application, a dedicated calibration tool does not need to be used, and calibration can be completed provided that a vehicle is motivated. An operation is simple and fast. In addition, when a mounting position relationship between the sensors changes, the calibration result can be updated online in the method in this embodiment of this application, to always ensure positioning precision of the integrated positioning system.

In an optional implementation, the plurality of sensors include an inertial measurement unit IMU of an inertial navigation system INS and a global navigation satellite system GNSS receiver, the GNSS receiver includes a GNSS antenna, and mounting positions of the IMU and the GNSS antenna are different; and the constructing an error model of a mounting deviation angle between the sensors based on attitude information output by the sensors includes: constructing an observation member of the error model, where the observation member is an attitude deviation between the IMU and the GNSS antenna; constructing a transfer relationship equation from an attitude matrix corresponding to the INS to an attitude matrix corresponding to the GNSS; and constructing the error model by combining the observation member of the error model and the transfer relationship equation, where the error model is an error model of a mounting deviation angle between the IMU and the GNSS antenna, the attitude information includes one or more of a roll angle, a pitch angle, and a heading angle, and the transfer relationship equation includes an attitude error of the INS and the mounting deviation angle between the IMU and the GNSS antenna.

In an optional implementation, the observation member of the error model includes:

$$\begin{cases} \delta\gamma_0 = \gamma_{m-}\gamma_g \\ \delta\theta_0 = \theta_{m-}\theta_g \\ \delta\varphi_0 = \varphi_{m-}\varphi_g \end{cases}$$

Herein, $\gamma_m$, $\theta_m$, and $\varphi_m$ are respectively a roll angle, a pitch angle, and a heading angle that are output by the INS; and $\gamma_g$, $\theta_g$, and $\varphi_g$ are respectively a roll angle, a pitch angle, and a heading angle that are output by the GNSS. In an optional implementation, the transfer relationship equation includes:

$$C_m^{n'} \approx C_g^n - \varphi \times C_g^n + C_g^n \lambda^0 \times$$

Herein, $C_m^{n'}$ is the attitude matrix corresponding to the INS, $C_g^n$ is the attitude matrix corresponding to the GNSS, $\varphi$ is the attitude error of the INS, $\lambda^0$ is the mounting deviation angle between the IMU and the GNSS antenna, and $\lambda^0 \times$ represents a cross product of $\lambda^0$.

In an optional implementation, the error model includes:

$$\begin{cases} Z_1 = \gamma_m - \gamma_g = \dfrac{T_{21}^g T_{33}^g - T_{23}^g T_{31}^g}{T_{31}^{g\,2} + T_{33}^{g\,2}}\varphi_E + \dfrac{T_{13}^g T_{31}^g - T_{11}^g T_{33}^g}{T_{31}^{g\,2} + T_{33}^{g\,2}}\varphi_N - \dfrac{T_{31}^g T_{32}^g}{T_{31}^{g\,2} + T_{33}^{g\,2}}\lambda_x^0 + \lambda_y^0 - \dfrac{T_{32}^g T_{33}^g}{T_{31}^{g\,2} + T_{33}^{g\,2}}\lambda_z^0 \\[4mm] Z_2 = \theta_m - \theta_g = -\dfrac{T_{22}^g}{\sqrt{1 - T_{32}^{g\,2}}}\varphi_E + \dfrac{T_{12}^g}{\sqrt{1 - T_{32}^{g\,2}}}\varphi_N + \dfrac{T_{33}^g}{\sqrt{1 - T_{32}^{g\,2}}}\lambda_x^0 - \dfrac{T_{31}^g}{\sqrt{1 - T_{32}^{g\,2}}}\lambda_z^0 \\[4mm] Z_3 = \varphi_m - \varphi_g = \dfrac{T_{12}^g T_{32}^g}{T_{12}^{g\,2} + T_{22}^{g\,2}}\varphi_E + \dfrac{T_{22}^g T_{32}^g}{T_{12}^{g\,2} + T_{22}^{g\,2}}\varphi_N - \varphi_U - \dfrac{T_{13}^g T_{22}^g - T_{12}^g T_{23}^g}{T_{12}^{g\,2} + T_{22}^{g\,2}}\lambda_x^0 - \dfrac{T_{12}^g T_{21}^g - T_{11}^g T_{22}^g}{T_{12}^{g\,2} + T_{22}^{g\,2}}\lambda_z^0 \end{cases}$$

Herein, $Z_1$, $Z_2$, and $Z_3$ are observation members of the error model; $\varphi_E$, $\varphi_N$, and $\varphi_U$ are respectively an E-axis attitude error, an N-axis attitude error, and a U-axis attitude error of the INS in an east-north-sky coordinate system; $\lambda_x^0$, $\lambda_y^0$, and $\lambda_z^0$ are respectively an X-axis mounting deviation angle, a Y-axis mounting deviation angle, and a Z-axis mounting deviation angle between the IMU and the GNSS antenna in a right front upper coordinate system; and another parameter is a parameter in the attitude matrix $C_m^g$ corresponding to the GNSS. In an optional implementation, the system state equation includes:

$$X = [X_1, X_2]$$

$$\dot{X}_1 = F_1 X_1 + G_1 W_1$$

$$\dot{X}_2 = F_2 X_2 + G_2 W_2$$

Herein, $X_1$ and $X_2$ are state variables, $X_1$ is an inertial navigation error, $X_2$ is the mounting deviation angle between the IMU and the GNSS antenna, $\dot{X}_1$ is a derivative of $X_1$, $F_1$ is a system matrix of an inertial navigation error model of the integrated positioning system, $G_1$ and $W_1$ are inertial navigation error driving noise, $\dot{X}_2$ is a derivative of $X_2$, $F_2$ is a system matrix of the error model of the mounting deviation angle between the IMU and the GNSS antenna, and $G_2$ and $W_2$ are error driving noise of the mounting deviation angle between the IMU and the GNSS antenna.

In an optional implementation, the system state equation includes:

$$Z = \mathrm{HX} + \mathrm{V} = [H_1 \quad H_2 \quad H_3]$$

Herein, Z is a system observation member, H is a system observation matrix, X is the system state equation, V is a system observation noise matrix, $H_1$ is an observation matrix corresponding to the attitude error of the INS, $H_2$ is an observation matrix corresponding to another state variable other than the attitude error in the inertial navigation error model, and $H_3$ is an observation matrix corresponding to the mounting deviation angle between the IMU and the GNSS antenna.

In an optional implementation, the performing filtering calculation on the system state equation and the system observation equation, and using, as a calibration result, an optimal estimation result that is of the mounting deviation angle and that is obtained when a filtering calculation result converges includes: performing Kalman filtering calculation on the system state equation and the system observation equation, to obtain an optimal estimation result of the mounting deviation angle between the IMU and the GNSS antenna; compensating for a positioning result of the GNSS and correcting an inertial navigation calculation result of the INS based on the optimal estimation result; and when the filtering calculation result converges, storing the optimal estimation result of the mounting deviation angle between the IMU and the GNSS antenna in a configuration file as the calibration result.

In an optional implementation, the plurality of sensors include an IMU and light detection and ranging LiDAR, and mounting positions of the IMU and the LiDAR are different; and the constructing an error model of a mounting deviation angle between the sensors based on attitude information output by the sensors includes: constructing an observation member of the error model, where the observation member is an attitude deviation between the IMU and the LiDAR; constructing a transfer relationship equation from an attitude matrix corresponding to an INS to an attitude matrix corresponding to the LiDAR; and constructing the error model by combining the observation member of the error model and the transfer relationship equation, where the error model is an error model of a mounting deviation angle between the IMU and the LiDAR, the attitude information includes one or more of a roll angle, a pitch angle, and a heading angle, and the transfer relationship equation includes an attitude error of the INS and the mounting deviation angle between the IMU and the LiDAR.

In an optional implementation, the observation member of the error model includes:

$$\begin{cases} \delta\gamma_1 = \gamma_{m-}\gamma_l \\ \delta\theta_1 = \theta_{m-}\theta_l \\ \delta\varphi_1 = \varphi_{m-}\varphi_l \end{cases}$$

Herein, $\gamma_m$, $\theta_m$, and $\varphi_m$ are respectively a roll angle, a pitch angle, and a heading angle that are output by the INS, and $\gamma_l$, $\theta_l$, and $\varphi_l$ are respectively a roll angle, a pitch angle, and a heading angle that are output by the LiDAR. In an optional implementation, the transfer relationship equation includes:

$$C_m^{n'} \approx C_l^n - \varphi \times C_l^n + C_l^n \lambda^1 \times$$

Herein, $C_m^{n'}$ is the attitude matrix corresponding to the INS, $C_l^n$ is the attitude matrix corresponding to the LiDAR, $\varphi$ is the attitude error of the INS, $\lambda^1$ is the mounting deviation angle between the IMU and the LiDAR antenna, and $\lambda^1 \times$ represents a cross product of $\lambda^1$.

In an optional implementation, the error model includes:

$$\begin{cases} Z_1 = \gamma_m - \gamma_l = \dfrac{T_{21}^l T_{33}^l - T_{23}^l T_{31}^l}{T_{31}^{l\,2} + T_{33}^{l\,2}}\varphi_E + \dfrac{T_{13}^l T_{31}^l - T_{11}^l T_{33}^l}{T_{31}^{l\,2} + T_{33}^{l\,2}}\varphi_N - \dfrac{T_{31}^l T_{32}^l}{T_{31}^{l\,2} + T_{33}^{l\,2}}\lambda_x^1 + \lambda_y^1 - \dfrac{T_{32}^l T_{33}^l}{T_{31}^{l\,2} + T_{33}^{l\,2}}\lambda_z^1 \\[3mm] Z_2 = \theta_m - \theta_l = -\dfrac{T_{22}^l}{\sqrt{1 - T_{32}^{l\,2}}}\varphi_E + \dfrac{T_{12}^l}{\sqrt{1 - T_{32}^{l\,2}}}\varphi_N + \dfrac{T_{33}^l}{\sqrt{1 - T_{32}^{l\,2}}}\lambda_x^1 - \dfrac{T_{31}^l}{\sqrt{1 - T_{32}^{l\,2}}}\lambda_z^1 \\[3mm] Z_3 = \varphi_m - \varphi_l = \dfrac{T_{12}^l T_{32}^l}{T_{12}^{l\,2} + T_{22}^{l\,2}}\varphi_E + \dfrac{T_{22}^l T_{32}^l}{T_{12}^{l\,2} + T_{22}^{l\,2}}\varphi_N - \varphi_U - \dfrac{T_{13}^l T_{22}^l - T_{12}^l T_{23}^l}{T_{12}^{l\,2} + T_{22}^{l\,2}}\lambda_x^1 - \dfrac{T_{12}^l T_{21}^l - T_{11}^l T_{22}^l}{T_{12}^{l\,2} + T_{22}^{l\,2}}\lambda_z^1 \end{cases}$$

Herein, $Z_1$, $Z_2$, and $Z_3$ are observation members of the error model; $\varphi_E$, $\varphi_N$, and $\varphi_U$ are respectively an E-axis attitude error, an N-axis attitude error, and a U-axis attitude error of the INS in an east-north-sky coordinate system; $\lambda_x^1$, $\lambda_y^1$, and $\lambda_z^1$ are respectively an X-axis mounting deviation angle, a Y-axis mounting deviation angle, and a Z-axis mounting deviation angle between the IMU and the LiDAR antenna in a right front upper coordinate system; and another parameter is a parameter in the attitude matrix $C_m^l$ corresponding to the LiDAR. In an optional implementation, the system state equation includes:

$$X=[X_1, X_3]$$

$$\dot{X}_1 = F_1 X_1 + G_1 W_1$$

$$\dot{X}_3 = F_3 X_3 + G_3 W_3$$

Herein, $X_1$ and $X_3$ are state variables, $X_1$ is an inertial navigation error, $X_3$ is the mounting deviation angle between the IMU and the LiDAR, $\dot{X}_1$ is a derivative of $X_1$, $F_1$ is a system matrix of an inertial navigation error model of the integrated positioning system, $G_1$ and $W_1$ are inertial navigation error driving noise, $\dot{X}_3$ is a derivative of $X_3$, $F_3$ is a system matrix of the error model of the mounting deviation angle between the IMU and the LiDAR, and $G_3$ and $W_3$ are error driving noise of the mounting deviation angle between the IMU and the LiDAR.

In an optional implementation, the system state equation includes:

$$Z = HX + V = [H_1 \quad H_2 \quad H_3]$$

Herein, Z is a system observation member, H is a system observation matrix, X is the system state equation, V is a system observation noise matrix, $H_1$ is an observation matrix corresponding to the attitude error of the INS, $H_2$ is an observation matrix corresponding to another state variable other than the attitude error in the inertial navigation error model, and $H_3$ is an observation matrix corresponding to the mounting deviation angle between the IMU and the LiDAR.

In an optional implementation, the performing filtering calculation on the system state equation and the system observation equation, and using, as a calibration result, an optimal estimation result that is of the mounting deviation angle and that is obtained when a filtering calculation result converges includes: performing Kalman filtering calculation on the system state equation and the system observation equation, to obtain an optimal estimation result of the mounting deviation angle between the IMU and the LiDAR; compensating for a positioning result of the LiDAR and correcting an inertial navigation calculation result of the INS based on the optimal estimation result; and when the filtering calculation result converges, storing the optimal estimation result of the mounting deviation angle between the IMU and the LiDAR in a configuration file as the calibration result.

According to a second aspect, an embodiment of this application provides an integrated positioning system. The system includes a processor, a memory, and a plurality of sensors, mounting positions of the plurality of sensors are different, the memory includes program instructions, and when the program instructions are run on the processor, the integrated positioning system is enabled to perform the following steps: constructing an error model of a mounting deviation angle between the sensors based on attitude information output by the sensors; constructing a system state equation, where a state variable of the system state equation includes the mounting deviation angle; constructing a system observation equation, where an observation member of the system observation equation includes an observation matrix corresponding to the mounting deviation angle determined based on the error model; and performing filtering calculation on the system state equation and the system observation equation, and using, as a calibration result, an estimation result that is of the mounting deviation angle and that is obtained when a filtering calculation result converges.

In the integrated positioning system provided in this embodiment of this application, the mounting deviation angle between the sensors is integrated into a state variable of the integrated positioning system, to calibrate (that is, online calibrate) the mounting deviation angle between the sensors in a running process of a vehicle. A physical structure of the sensors is not considered in a calibration process, and calibration precision is high. In addition, in the integrated positioning system in this embodiment of this application, a dedicated calibration tool does not need to be used, and calibration can be completed provided that a vehicle is motivated. An operation is simple and fast. In addition, when a mounting position relationship between the sensors changes, the calibration result can be updated online in a method in this embodiment of this application, to always ensure positioning precision of the integrated positioning system. In an optional implementation, the plurality of sensors include an inertial measurement unit IMU of an inertial navigation system INS and a global navigation satellite system GNSS receiver, the GNSS receiver includes a GNSS antenna, and mounting positions of the IMU and the GNSS antenna are different; and when the program instructions are run on the processor, the integrated positioning system is enabled to perform the following steps, to implement the step of constructing an error model of a mounting deviation angle between the sensors based on attitude information output by the sensors: constructing an observation member of the error model, where the observation member is an attitude deviation between the IMU and the GNSS antenna; constructing a transfer relationship equation from an attitude matrix corresponding to the INS to an attitude matrix corresponding to the GNSS; and constructing the error model by combining the observation member of the error model and the transfer relationship equation, where the error model is an error model of a mounting deviation angle between the IMU and the GNSS antenna, the attitude information includes one or more of a roll angle, a pitch angle, and a heading angle, and the transfer relationship equation includes an attitude error of the INS and the mounting deviation angle between the IMU and the GNSS antenna.

In an optional implementation, when the program instructions are run on the processor, the integrated positioning system is enabled to perform the following steps, to implement the step of performing filtering calculation on the system state equation and the system observation equation, and using, as a calibration result, an optimal estimation result that is of the mounting deviation angle and that is obtained when a filtering calculation result converges: performing Kalman filtering calculation on the system state equation and the system observation equation, to obtain an optimal estimation result of the mounting deviation angle between the IMU and the GNSS antenna; compensating for a positioning result of the GNSS and correcting an inertial navigation calculation result of the INS based on the optimal estimation result; and when the filtering calculation result converges, storing the optimal estimation result of the mounting deviation angle between the IMU and the GNSS antenna in a configuration file as the calibration result. In an optional implementation, the plurality of sensors include an IMU and light detection and ranging LiDAR, and mounting positions of the IMU and the LiDAR are different; and when the program instructions are run on the processor, the integrated positioning system is enabled to perform the following steps, to implement the step of constructing an error model of a mounting deviation angle between the sensors based on attitude information output by the sensors: constructing an observation member of the error model, where the observation member is an attitude deviation between the IMU and the LiDAR; constructing a transfer relationship equation from an attitude matrix corresponding to an INS to an attitude matrix corresponding to the LiDAR; and constructing the error model by combining the observation member of the error model and the transfer relationship equation, where the error model is an error model of a mounting deviation angle between the IMU and the LiDAR, the attitude information includes one or more of a roll angle, a pitch angle, and a heading angle, and the transfer relationship equation includes an attitude error of the INS and the mounting deviation angle between the IMU and the LiDAR.

In an optional implementation, when the program instructions are run on the processor, the integrated positioning system is enabled to perform the following steps, to implement the step of performing filtering calculation on the system state equation and the system observation equation, and using, as a calibration result, an optimal estimation result that is of the mounting deviation angle and that is obtained when a filtering calculation result converges includes: performing Kalman filtering calculation on the system state equation and the system observation equation, to obtain an optimal estimation result of the mounting deviation angle between the IMU and the LiDAR; compensating for a positioning result of the LiDAR and correcting an inertial navigation calculation result of the INS based on the optimal estimation result; and when the filtering calculation result converges, storing the optimal estimation result of the mounting deviation angle between the IMU and the LiDAR in a configuration file as the calibration result.

Further, the integrated positioning system provided in this embodiment of this application may further perform another implementation of the first aspect.

According to a third aspect, an embodiment of this application provides a vehicle. The vehicle includes an integrated positioning system, the integrated positioning system includes a processor, a memory, and a plurality of sensors, different sensors are mounted in different positions of the vehicle, the memory includes program instructions, and when the program instructions are run on the processor, the integrated positioning system is enabled to perform the method in any one of the first aspect and the implementations of the first aspect.

According to a fourth aspect, an embodiment of this application further provides a computer-readable storage medium. The computer-readable storage medium stores instructions, and when the instructions are run on a computer, the computer is enabled to perform the method in the foregoing aspects.

According to a fifth aspect, an embodiment of this application further provides a computer program product including instructions, and when the instructions are run on a computer, the computer is enabled to perform the method in the foregoing aspects.

According to a sixth aspect, an embodiment of this application further provides a chip system. The chip system includes a processor, configured to support the foregoing apparatus or system to implement a function in the foregoing aspects, for example, generate or process information in the method.

## BRIEF DESCRIPTION OF DRAWINGS

FIG. 1 is a data logic block diagram of an integrated positioning system in which an integrated positioning algorithm is used;

FIG. 2 is a schematic diagram of a position, on a vehicle, of each sensor in an integrated positioning system;

FIG. 3 is a schematic diagram of a structure of a mounting deviation angle according to an embodiment of this application;

FIG. 4 is a diagram of a hardware structure of an integrated positioning system according to an embodiment of this application;

FIG. 5 is a data logic block diagram of an expanded integrated positioning system according to an embodiment of this application;

FIG. 6 is a flowchart in which a method for calibrating a mounting deviation angle between sensors is applied to calibration of a mounting deviation angle between an IMU and a GNSS antenna according to an embodiment of this application;

FIG. 7 is a flowchart in which a method for calibrating a mounting deviation angle between sensors is applied to calibration of a mounting deviation angle between an IMU and LiDAR according to an embodiment of this application;

FIG. 8 is a schematic diagram of a software module of an integrated positioning system according to an embodiment of this application;

FIG. 9 is a data logic block diagram in which a software module of an integrated positioning system is applied to calibration of a mounting deviation angle between an IMU and a GNSS antenna according to an embodiment of this application; and

FIG. 10 is a data logic block diagram in which a software module of an integrated positioning system is applied to calibration of a mounting deviation angle between an IMU and LiDAR according to an embodiment of this application.

## DESCRIPTION OF EMBODIMENTS

A self-driving vehicle (autonomous vehicles or self-driving automobile) is also referred to as a driverless vehicle, a computer driving vehicle, or a wheel-type mobile robot. The self-driving vehicle can sense a surrounding environment of the self-driving vehicle by using a technology such as radar, a global navigation satellite system (global navigation satellite system, GNSS), or machine vision, and determine a position of the self-driving vehicle, plan a navigation route, update map information, avoid an obstacle, and so on based on sensed data. Finally, the vehicle is autonomously driven without any active human operation or with few active human operations.

Usually speaking, for the self-driving vehicle, three core problems of driving needs to be resolved: an original place (positioning the vehicle), a destination (determining a destination), and a route (planning a path). A positioning system of the self-driving vehicle is mainly used to resolve the question of "original place". Therefore, as one of key modules of the self-driving vehicle, performance of the positioning system directly determines stability and reliability of the self-driving vehicle.

Currently, to resolve the problem of "original place", the positioning system usually includes a sensor for vehicle positioning, for example, an inertial measurement unit IMU, a GNSS receiver, light detection and ranging LiDAR, an odometer, or a vision sensor. The IMU may include, for example, a triaxial gyroscope and an accelerometer, and may be configured to measure an angular velocity and acceleration of the self-driving vehicle. The GNSS receiver may be configured to measure a satellite signal of the GNSS. The LiDAR may be configured to measure a distance between the vehicle and another object. Because different sensors are used to measure different data, each sensor has an advantage and a limitation in the positioning system. It is difficult to meet a requirement for high positioning precision, a strong anti-interference capability, and fast data updating by using any sensor independently. Therefore, a current positioning system usually combines data of a plurality of sensors, and obtains a position and an attitude of the vehicle through calculation based on an integrated positioning algorithm, to achieve an effect of taking an advantage and complementing each other, so as to improve stability and reliability of the positioning system.

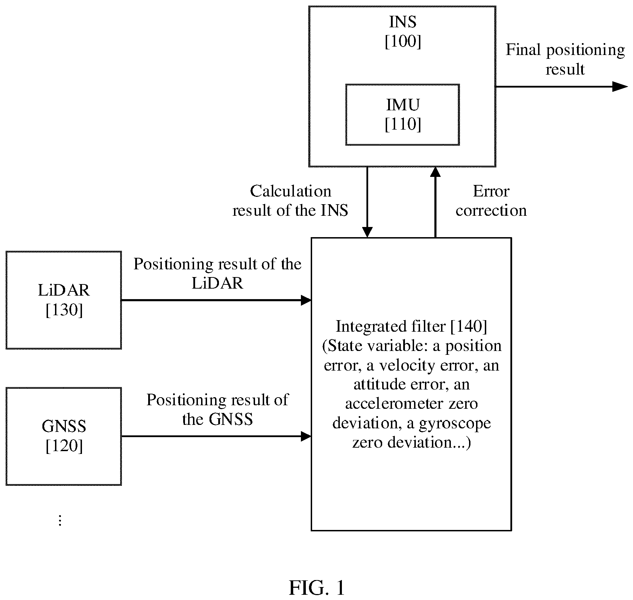

Currently, a data logic block diagram of an integrated positioning system in which an integrated positioning algorithm is used is shown in FIG. 1. In the integrated positioning system, a calculation result of an INS 100, for example, position, velocity, and attitude information (referred to as inertial navigation attitude below) output based on an angular velocity and acceleration measured by an IMU 110, a positioning result of a GNSS 120, a positioning result of LiDAR 130, and the like are used as an input of an integrated filter 140, and error correction is performed on the calculation result of the INS 100 by using a filtering result, to determine a final positioning result, for example, an attitude and a covariance of the attitude. In FIG. 1 and another common positioning system, a system variable of the integrated filter 140 is usually an inertial navigation related error (briefly referred to an inertial navigation error), for example, a position error, a velocity error, an attitude error, an accelerometer zero deviation, and a gyroscope zero deviation. The integrated filter 140 in this embodiment of this application may be, for example, a Kalman filter (Kalman filter, KF). The Kalman filter is a recursive filter (autoregressive filter), and can estimate a state of a dynamic system from a series of incomplete and noise-included measurement members. The Kalman filter considers a joint distribution at each time point based on values of each measurement member at different time points, and estimates an unknown variable. Such estimation manner is more accurate than an estimation manner performed based on a single measurement member.

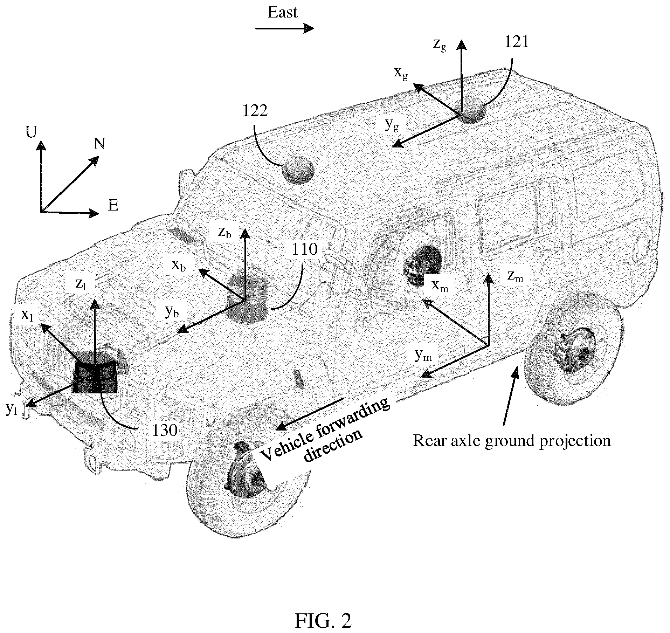

FIG. 2 is a schematic diagram of a position, on a vehicle, of each sensor in an integrated positioning system. As shown in FIG. 2, the sensor in the integrated positioning system includes an IMU 110, LiDAR 130, and a GNSS antenna. The GNSS antenna may include one GNSS master antenna 121 and one GNSS slave antenna 122, and is referred to as a GNSS dual-antenna. All the sensors in the integrated positioning system are usually mounted in different positions of the vehicle. For example, the IMU 110 is mounted in the middle of the vehicle, the GNSS dual-antenna is mounted at the top of the vehicle, the GNSS master antenna 121 and the GNSS slave antenna 122 are disposed in a front-to-rear manner, to receive a GNSS signal of a satellite, and the LiDAR 130 is mounted at a head of the vehicle, to measure an object in front of the vehicle in a driving direction.

Usually, each sensor describes a calculation result or a positioning result based on a coordinate system of the sensor, and each sensor has a different coordinate system because each sensor has a different mounting position. For example, as shown in FIG. 2, the integrated positioning system includes an environmental coordinate system (E, N, U), a LiDAR coordinate system $(X_1, Y_1, Z_1)$, an IMU coordinate system $(X_b, Y_b, Z_b)$, a GNSS coordinate system $(X_g, Y_g, Z_g)$, and a rear axle ground projection coordinate system $(X_m, Y_m, Z_m)$. It can be understood that, because each sensor has a different coordinate system, when filtering calculation is performed on the calculation result or the positioning result of each sensor, the coordinate system needs to be normalized depending on a mounting position relationship between the sensors. The mounting position relationship between the sensors can be obtained through calibration. Therefore, calibration precision becomes an important factor of positioning precision of the integrated positioning system.

In an embodiment, the environmental coordinate system (E, N, U) may be, for example, a station center coordinate system, and is also referred to as an east-north-sky coordinate system ENU. In the station center coordinate system, a position in which a target (for example, the GNSS antenna) is located is used as a coordinate origin, and an E-axis pointing to the east, an N-axis pointing to the north, and a U-axis pointing to the sky are included.

In an embodiment, a right front upper coordinate system may be used for each of the LiDAR coordinate system $(X_1, Y_1, Z_1)$, the IMU coordinate system $(X_b, Y_b, Z_b)$, the GNSS coordinate system $(X_g, Y_g, Z_g)$, and the rear axle ground projection coordinate system $(X_m, Y_m, Z_m)$. In the integrated positioning system, in the right front upper coordinate system, a forwarding direction of a carrier (for example, the vehicle) is a direction of a Y-axis, a right side of the carrier is a direction of an X-axis, and an upward direction perpendicular to the X-axis and the Y-axis is a direction of a Z-axis. An origin of each coordinate system may be a center of a sensor corresponding to the coordinate system.

In this embodiment of this application, the mounting position relationship between the sensors may include an arm parameter and a mounting deviation angle. The arm parameter mainly describes a mounting position distance between the sensors, and usually may be directly measured by a measurement device. The mounting deviation angle mainly describes a mounting angle deviation between the sensors. In consideration of the mounting position relationship between the sensors on the vehicle and respective structure characteristics of the sensors, it is difficult to directly and accurately measure the mounting deviation angle between the sensors by using the measurement device. Usually, the mounting deviation angle may include a mounting deviation angle between the IMU and the GNSS antenna, and a mounting deviation angle between the IMU and the LiDAR.

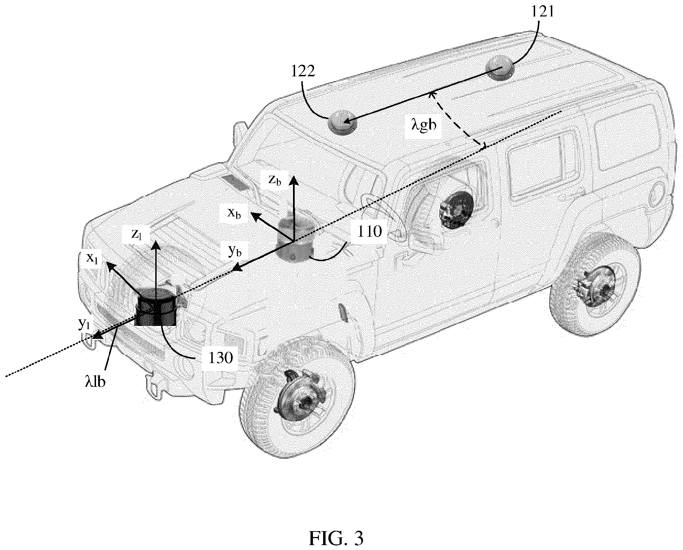

FIG. 3 is a schematic diagram of a mounting deviation angle according to an embodiment of this application. As shown in FIG. 3, a heading mounting deviation angle between the IMU 110 and the GNSS antenna is an included angle $\lambda gb$ between a connecting line between the GNSS dual-antenna (from the GNSS master antenna 121 to the GNSS slave antenna 122) and a forwarding axis (yb) of the IMU coordinate system, and a heading mounting deviation angle between the IMU 110 and the LiDAR 130 is an included angle $\lambda lb$ between a forwarding axis (yl) of the LiDAR coordinate system and a forwarding axis (yb) of the IMU coordinate system.

Currently, the mounting deviation angle between the IMU and the GNSS antenna is mainly calibrated in an offline calibration method, and is mainly calibrated by using an optical means. The heading mounting deviation angle is used as an example. Headings of the IMU and the GNSS antenna may be calibrated by using the optical means, and then a deviation value between the headings, namely, the heading mounting deviation angle between the IMU and the GNSS antenna is calculated. However, because a phase center of the GNSS antenna is located inside the antenna, it is difficult to accurately measure an axis of the dual-antenna. Consequently, calibration precision of the method is low. In addition, the method needs to depend on a dedicated calibration tool, for example, a laser scanner or a theodolite. An operation is cumbersome, and a calibration time period is long. In addition, when a mounting position relationship between the IMU and the GNSS changes because the vehicle vibrates, bumps, or the like for a long period of time, calibration needs to be performed again. If calibration is not performed again, the positioning precision of the integrated positioning system is affected.

Currently, a method for calibrating the mounting deviation angle between the IMU and the LiDAR is also mainly the offline calibration method, and the mounting deviation angle between the IMU and the LiDAR is mainly calibrated in an indirect calibration method. The heading mounting deviation angle is used as an example. A connection between the IMU and the LiDAR may be established by using a measurement common point or an auxiliary measurement coordinate system, to further determine the heading mounting deviation angle between the IMU and the LiDAR. This method also needs to rely on the dedicated calibration tool, an operation is cumbersome, and a calibration time period is long. In addition, when the mounting position relationship between the IMU and the LiDAR changes, calibration needs to be calibrated again. If calibration is not performed again, the positioning precision of the integrated positioning system is affected.

To resolve a technical problem existing in the conventional technology, an embodiment of this application provides a method for calibrating a mounting deviation angle between sensors.

The integrated positioning system in this embodiment of this application may be a positioning system including two or more positioning sensors, and the positioning system comprehensively determines a final positioning result based on calculation results or positioning results of the two or more sensors. A positioning sensor specifically included in the integrated positioning system is not limited in this embodiment of this application. For example, in some embodiments, the integrated positioning system may include the IMU and the GNSS. In some other embodiments, the integrated positioning system includes the IMU and the LiDAR. In some other embodiments, the integrated positioning system may include the IMU, the LiDAR, and the GNSS. In some other embodiments, the integrated positioning system may include another sensor in addition to the foregoing positioning sensors.

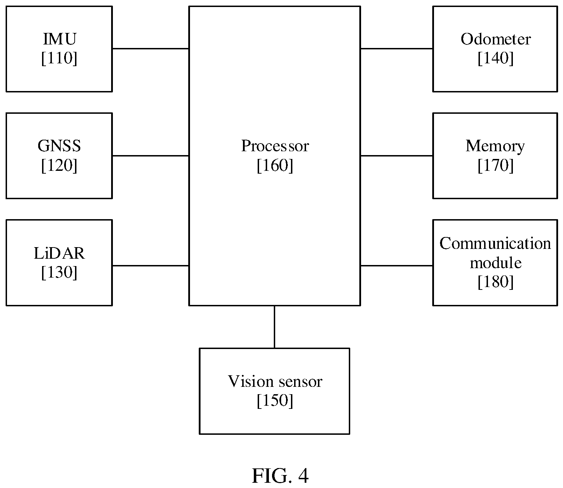

FIG. 4 is a diagram of a hardware structure of an integrated positioning system according to an embodiment of this application. In an embodiment, the integrated positioning system may include sensors such as an IMU 110, a GNSS 120, LiDAR 130, an odometer 140, and a vision sensor 150, a processor 160, a memory 170, and a communications module 180. The sensors such as the IMU 110, the GNSS 120, and the LiDAR 130 are configured to measure and receive various types of measurement data. The processor 160 is configured to calculate the measurement data based on a corresponding integrated positioning algorithm, for example, inertial navigation calculation or a Kalman filtering calculation, to obtain a positioning result.

The processor 160 may include, for example, one or more processing units such as a central processing unit (central processing unit, CPU), a microcontroller (microcontroller, MCU), an image signal processor (image signal processor, ISP), or a neural network processor (neural-network processing unit, NPU). Different processing units may be independent components, or may be integrated into one or more processors, for example, integrated into a system on a chip (system on a chip, SoC). A memory may be further disposed in the processor 160, and is configured to store instructions and data. In some embodiments, the memory in the processor is a cache. The memory may store instructions or data just used or cyclically used by the processor.

The memory 170 may include one or more storage units such as a volatile memory (volatile memory), for example, a dynamic random access memory (dynamic random access memory, DRAM) or a static random access memory (static random access memory, SRAM); and may further include a non-volatile memory (non-volatile memory, NVM), for example, a read-only memory (read-only memory, ROM) or a flash memory (flash memory). The memory 170 may be configured to store program code and instructions that can be executed by the processor, for example, program code and instructions used for processing sensor data, a program and instructions used for an inertial navigation calculation result, or a program and instructions used for implementing a Kalman filtering algorithm. The memory 170 may further store a vehicle operating system of an automated driving computing platform, for example, a Harmony operating system Harmony OS or a UQX operating system.

The communications module 180 is configured to enable a vehicle to communicate with various network modes of 2G, 3G, 4G, and 5G, for example, implement vehicle-to-everything (vehicle-to-everything, V2X) of the vehicle. The communications module may include, for example, a baseband chip, a power amplifier, or an antenna. In some embodiments, some or all components of the communications module 180 may be integrated with one or more processors. For example, the baseband chip may be integrated into the SoC with the CPU, the NPU, or the ISP.

In addition, the integrated positioning system may further include a communications interface, for example, a controller area network (controller area network, CAN) interface, so that the processor can communicate with another chip and device of the vehicle, for example, an electronic control unit (electrical control unit, ECU).

It may be understood that, the hardware structure of the integrated positioning system illustrated in this embodiment of this application does not constitute a specific limitation on the integrated positioning system. In some other embodiments of this application, the hardware structure of the integrated positioning system may include more or fewer components than those shown in the figure, or combine some components, or split some components, or have different component arrangements. The components shown in the figure may be implemented by hardware, software, or a combination of software and hardware.

The integrated positioning system in this embodiment of this application may be mounted on various carriers to which an automated driving technology or navigation positioning is applied, and includes but is not limited to various transport such as a vehicle (an automobile), a ship, a train, a subway, and an airplane; various robots such as a service robot, a transport robot, an automated guided robot (automated guided vehicle, AGV), and an unmanned ground vehicle (unmanned ground vehicle, UGV); and various engineering machines such as a tunnel boring machine.

The following provides, by using an example in which the integrated positioning system includes sensors such as the IMU, the LiDAR and the GNSS, an example description of a technical solution of a method for calibrating a mounting deviation angle between sensors provided in an embodiment of this application.

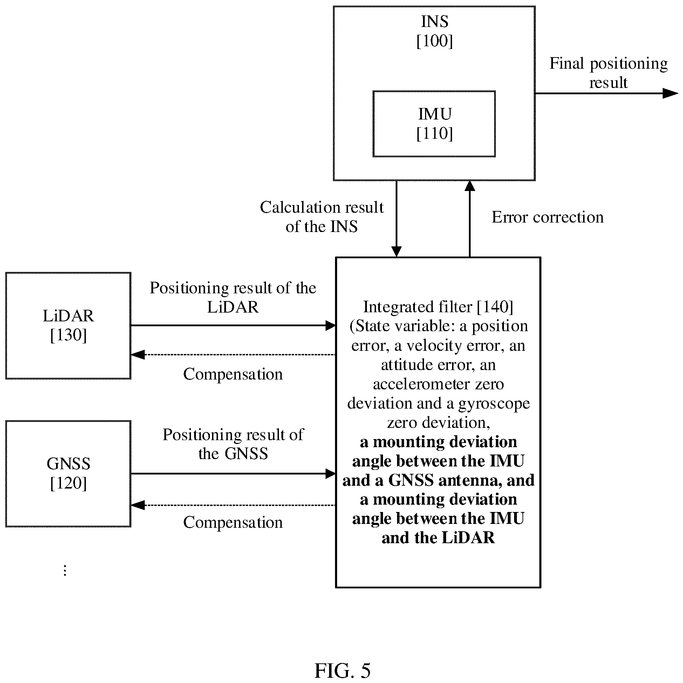

In this embodiment of this application, a state variable of a current integrated positioning system is expanded, and a data logic block diagram of an expanded integrated positioning system is shown in FIG. 5. In the integrated positioning system, an inertial navigation attitude determined based on an angular velocity and acceleration measured by the IMU 110, a positioning result of the GNSS 120, a positioning result of the LiDAR 130, or the like is used as an input of an integrated positioning filter, and a mounting deviation angle between the IMU and the GNSS antenna and a mounting deviation angle between the IMU and the LiDAR are added to a system variable of the integrated positioning system based on an original inertial navigation related error, for example, a position error, a velocity error, an attitude error, an accelerometer zero deviation, or a gyroscope zero deviation, so that the mounting deviation angle between the IMU and the GNSS antenna and the mounting deviation angle between the IMU and the LiDAR are calibrated online by using an integrated filter. When a state variable of the integrated positioning filter is converged, positioning results of the GNSS and the LiDAR are compensated for based on the mounting deviation angle between the IMU and the GNSS antenna and the mounting deviation angle between the IMU and the LiDAR in an offline calibration result, to improve positioning precision.

In some embodiments, the method for calibrating a mounting deviation angle between sensors provided in this application may specifically include two parts. A first part includes calibration of the mounting deviation angle between the IMU and the GNSS dual-antenna, and the second part includes calibration of the mounting deviation angle between the IMU and the LiDAR. The two parts of the method are specifically explained and described below with reference to more accompanying drawings.

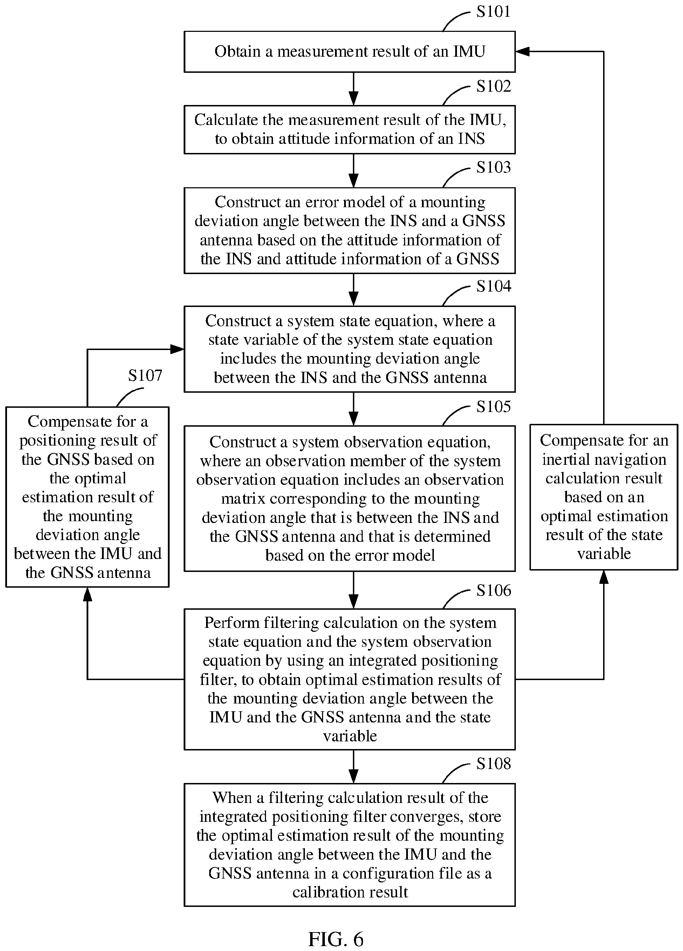

FIG. 6 is a flowchart in which a method for calibrating a mounting deviation angle between sensors is applied to calibration of a mounting deviation angle between an IMU and a GNSS antenna according to an embodiment of this application. As shown in FIG. 6, the method may include the following steps.

Step S101: Obtain a measurement result of the IMU.

The measurement result of the IMU may include, for example, an angular velocity and acceleration information measured by the IMU.

In a specific implementation, after sensors such as the IMU and a GNSS is fixedly mounted on a carrier, the carrier may be motivated, for example, accelerate, decelerate, run at a constant velocity, turn left, or turn right. In a period in which the carrier is motivated, an integrated positioning system may continuously obtain, in real time, the angular velocity and the acceleration information measured by IMU.

Step S102: Calculate the measurement result of the IMU, to obtain attitude information of an INS.

The attitude information of the INS may be expressed by using an attitude matrix. In addition, information such as a position and a velocity of the INS may be further obtained after the measurement result is calculated in step S102. The position, velocity, and attitude information may also be collectively referred to as an inertial navigation attitude.

In a specific implementation, in a process in which the carrier is motivated, the integrated positioning system may continuously calculate measurement result data of the IMU in real time, to continuously obtain current position, velocity, and attitude information, or the like of the vehicle.

In an embodiment, in an initial phase of calculation, an initial position and an initial velocity of the vehicle may be determined based on a positioning result of the GNSS, and are used as initial data of the IMU. Then, the integrated positioning system may calculate latest position, velocity, and attitude information of the vehicle through calculation based on the initial data and current measurement result data of the IMU. In a non-initial phase of calculation, the integrated positioning system may obtain the latest position, velocity, and attitude information of the vehicle based on the position, velocity, and attitude information of the vehicle that are previously obtained through calculation and current measurement result data of the IMU.

Step S103: Construct an error model of a mounting deviation angle between the INS and the GNSS antenna based on the attitude information of the INS and attitude information of the GNSS.

The error model is described based on a state variable of an integrated positioning filter.

In an embodiment, to construct an error model of the mounting deviation angle between the IMU and the GNSS, an attitude matrix $C_m^{n'}$ corresponding to the INS and an attitude matrix $C_g^n$ corresponding to the GNSS may be constructed in this embodiment of this application.

The attitude matrix $C_m^{n'}$ may be, for example, a $3 \times 3$ matrix, and indicates that an attitude output by the INS is mapped from a rear axle ground projection coordinate system (Xm, Ym, Zm) to an environmental coordinate system (E, N, U) through translation, rotation, and the like. Usually, because there may be an error in a mounting position of the IMU, after an attitude output by the IMU is mapped from the rear axle ground projection coordinate system (Xm, Ym, Zm), the attitude may be mapped to an environmental coordinate system (Xn', Yn', Zn') having an error. Therefore, the attitude matrix corresponding to the IMU is denoted as $C_m^{n'}$ in this embodiment of this application.

The attitude matrix $C_g^n$ may be, for example, a $3 \times 3$ matrix, and indicates that an attitude output by the GNSS is mapped from a GNSS coordinate system (Xg, Yg, Zg) to the environmental coordinate system (E, N, U) through translation, rotation, and the like.

For example, the attitude matrix $C_m^{n'}$ corresponding to the IMU and the attitude matrix $C_g^n$ corresponding to the GNSS may be expressed by using Formula (1):

$$C_m^{n'} = \begin{bmatrix} T_{11}^m & T_{12}^m & T_{13}^m \\ T_{21}^m & T_{22}^m & T_{23}^m \\ T_{31}^m & T_{32}^m & T_{33}^m \end{bmatrix}, C_g^n = \begin{bmatrix} T_{11}^g & T_{12}^g & T_{13}^g \\ T_{21}^g & T_{22}^g & T_{23}^g \\ T_{31}^g & T_{32}^g & T_{33}^g \end{bmatrix} \tag{1}$$

Parameters such as $T_{11}^m$ and $T_{12}^m$ in the attitude matrix $C_m^{n'}$ are used to represent parameters such as translation and rotation that need to be used to map the attitude output by the INS from the rear axle ground projection coordinate system (Xm, Ym, Zm) to the environmental coordinate system (E, N, U). Parameters such as $T_{11}^g$ and $T_{12}^g$ in the attitude matrix $C_g^n$ are used to represent parameters such as translation and rotation that need to be used to map the attitude output by the GNSS from the GNSS coordinate system (Xg, Yg, Zg) to the environmental coordinate system (E, N, U).

In addition, to facilitate description, a roll angle output by the INS is denoted as $\gamma_m$, a pitch angle is denoted as $\theta_m$, a heading angle is denoted as $\varphi_m$, a roll angle output by the GNSS through positioning is denoted as $\gamma_g$, a pitch angle is denoted as $\theta_g$, and a heading angle is denoted as $\varphi_g$ herein in this embodiment of this application. Then, an observation member of the error model may be expressed by using Formula (2):

$$\begin{cases} \delta\gamma_0 = \gamma_{m-}\gamma_g \\ \delta\theta_0 = \theta_{m-}\theta_g \\ \delta\varphi_0 = \varphi_{m-}\varphi_g \end{cases} \tag{2}$$

Herein, $\delta\gamma_0$ denotes a deviation between roll angles output by the IMU and the GNSS, $\delta\theta_0$ denotes a deviation between pitch angles output by the IMU and the GNSS, and $\delta\varphi_0$ denotes a deviation between heading angles output by the IMU and the GNSS. To facilitate general description, the deviations are referred to as an attitude deviation between the IMU and the GNSS antenna in this embodiment of this application.

It should be additionally noted that, in a positioning and navigation process of automated driving of the vehicle, a heading angle obviously affect precision of a positioning result. Therefore, in this embodiment of this application, output of only a heading mounting deviation angle between the IMU and the GNSS dual-antenna may be considered when the calibration result is subsequently output.

Further, in this embodiment of this application, the attitude matrix $C_m^{n'}$ corresponding to the IMU may be transformed as follows, to construct a transfer relationship equation from the attitude matrix corresponding to the INS to the attitude matrix corresponding to the GNSS, so as to establish a connection between the attitude matrix corresponding to the INS and the attitude matrix $C_g^n$ corresponding to the GNSS.

The attitude matrix $C_m^{n'}$ may be decomposed into two transformation matrices, namely, $C_n^{n'}$ and $C_m^n$. In addition, $C_m^{n'} = C_n^{n'} C_m^n$. Herein, $C_n^{n'}$ may be, for example, a $3 \times 3$ matrix, and indicates that the attitude is mapped, through translation, rotation, and the like, from the environmental coordinate system (E, N, U) to the environmental coordinate system (Xn', Yn', Zn') having an error; and $C_m^n$ may be, for example, a $3 \times 3$ matrix, and indicates that the attitude is mapped from the rear axle ground projection coordinate system (Xm, Ym, Zm) to the environmental coordinate system (E, N, U) through translation, rotation, and the like. $C_m^n$ may be further decomposed into two transformation matrices, namely, $C_g^n$ and $C_m^g$. In addition, $C_m^n = C_g^n C_m^g$. Herein, $C_g^n$ may be, for example, a $3 \times 3$ matrix, and indicates that the attitude is mapped from the GNSS coordinate system (Xg, Yg, Zg) to the environmental coordinate system (E, N, U) through translation, rotation, and the like; and $C_m^g$ may be, for example, a $3 \times 3$ matrix, and indicates that the attitude is mapped from the rear axle ground projection coordinate system (Xm, Ym, Zm) to the GNSS coordinate system (Xg, Yg, Zg) through translation, rotation, and the like.

Further, Formula (3) is obtained:

$$C_m^{n'} = C_n^{n'} C_m^n = C_n^{n'} C_g^n C_m^g \tag{3}$$

Further, in this embodiment of this application, the attitude error of the INS and the mounting deviation angle between the IMU and the GNSS antenna may be introduced into the state variable of the integrated positioning filter based on Formula (3).

For example, an attitude error $\varphi$ that is of the INS and that is described by using an east-north-sky coordinate system may be:

$$\varphi = [\varphi_E \varphi_N \varphi_U]^T$$

Herein, $\varphi_E$ is an E-axis attitude error of the INS, $\varphi_N$ is an N-axis attitude error of the INS, and $\varphi_U$ is a U-axis attitude error of the INS. Therefore:

$$C_n^{n'} = (I - \varphi \times)$$

Herein, $\varphi \times$ denotes a cross product of $\varphi$, and I is an identity matrix:

$$I = \begin{bmatrix} 1 & 0 & 0 \\ 0 & 1 & 0 \\ 0 & 0 & 1 \end{bmatrix}$$

For example, the mounting deviation angle $\lambda$ between the IMU and the GNSS antenna may be:

$$\lambda^0 = [\lambda_x^0 \lambda_y^0 \lambda_z^0]^T$$

Herein, $\lambda_x^0$ is a mounting deviation angle in a direction of an X-axis, $\lambda_y^0$ is a mounting deviation angle in a direction of a Y-axis, and $\lambda_z^0$ is a mounting deviation angle in a direction of a Z-axis. Therefore:

$$C_m^g = (I - \lambda^0 \times)$$

Herein, $\lambda^0 \times$ denotes a cross product of $\lambda^0$.

Therefore, Formula (4) may be further obtained based on Formula (3):

$$C_m^{n'} = C_n^{n'} C_m^n = C_n^{n'} C_g^n C_m^g$$

$$= (I - \varphi \times) C_g^n (I + \lambda^0 \times)$$

$$\approx C_g^n - \varphi \times C_g^n + C_g^n \lambda^0 \times \qquad (4)$$

Formula (4) may be used as the transfer relationship equation from the attitude matrix corresponding to the INS to the attitude matrix corresponding to the GNSS.

Next, a relationship between elements in the attitude matrix corresponding to the IMU and the attitude matrix corresponding to the GNSS may be derived as shown in formula (5) by combining Formula (1), Formula (2), and Formula (4):

$$\begin{cases} tan\gamma_m = \tan(\gamma_g + \delta\gamma_0) = -\dfrac{T_{31}^m}{T_{33}^m} = \dfrac{T_{11}^g \varphi_N - T_{21}^g \varphi_E + T_{31}^g + T_{32}^g \lambda_z^0 - T_{33}^g \lambda_y^0}{T_{13}^g \varphi_N - T_{23}^g \varphi_E + T_{31}^g \lambda_y^0 - T_{32}^g \lambda_x^0 + T_{33}^g} \\ sin\theta_m = \sin(\theta_g + \delta\theta_0) = T_{32}^m = T_{12}^g \varphi_N - T_{22}^g \varphi_E - T_{31}^g \lambda_z^0 + T_{32}^g + T_{33}^g \lambda_x^0 \\ tan\varphi_m = \tan(\varphi_g + \delta\varphi_0) = -\dfrac{T_{12}^m}{T_{22}^m} = -\dfrac{T_{11}^g \lambda_z^0 + T_{12}^g + T_{13}^g \lambda_x^0 + T_{22}^g \varphi_U - T_{32}^g \varphi_N}{T_{12}^g \varphi_U - T_{21}^g \lambda_z^0 + T_{22}^g + T_{23}^g \lambda_z^0 - T_{32}^g \varphi_E} \end{cases} \qquad (5)$$

A left end of Formula (5) is expanded based on a Tyler series, and a higher order term above a second order in the formula is ignored, so that Formula (6) is obtained:

$$\begin{cases} Z_1 = \gamma_m - \gamma_g = \dfrac{T_{21}^g T_{33}^g - T_{23}^g T_{31}^g}{T_{31}^{g\,2} + T_{33}^{g\,2}} \varphi_E + \dfrac{T_{13}^g T_{31}^g - T_{11}^g T_{33}^g}{T_{31}^{g\,2} + T_{33}^{g\,2}} \varphi_N - \dfrac{T_{31}^g T_{32}^g}{T_{31}^{g\,2} + T_{33}^{g\,2}} \lambda_x^0 + \lambda_y^0 - \dfrac{T_{32}^g T_{33}^g}{T_{31}^{g\,2} + T_{33}^{g\,2}} \lambda_z^0 \\ Z_2 = \theta_m - \theta_g = -\dfrac{T_{22}^g}{\sqrt{1 - T_{32}^{g\,2}}} \varphi_E + \dfrac{T_{12}^g}{\sqrt{1 - T_{32}^{g\,2}}} \varphi_N + \dfrac{T_{33}^g}{\sqrt{1 - T_{32}^{g\,2}}} \lambda_x^0 - \dfrac{T_{31}^g}{\sqrt{1 - T_{32}^{g\,2}}} \lambda_z^0 \\ Z_3 = \varphi_m - \varphi_g = \dfrac{T_{12}^g T_{32}^g}{T_{12}^{g\,2} + T_{22}^{g\,2}} \varphi_E + \dfrac{T_{22}^g T_{32}^g}{T_{12}^{g\,2} + T_{22}^{g\,2}} \varphi_N - \varphi_U - \dfrac{T_{13}^g T_{22}^g - T_{12}^g T_{23}^g}{T_{12}^{g\,2} + T_{22}^{g\,2}} \lambda_x^0 - \dfrac{T_{12}^g T_{21}^g - T_{11}^g T_{22}^g}{T_{12}^{g\,2} + T_{22}^{g\,2}} \lambda_z^0 \end{cases} \qquad (6)$$

Formula (6) may be referred to as the error model of the mounting deviation angle between the IMU and the GNSS dual-antenna. Herein, $Z_1$, $Z_2$, and $Z_3$ are observation members of the error model; $\varphi_E$, $\varphi_N$, and $\varphi_U$ are attitude errors of the INS, for example, a platform error angle; and $\lambda_x^0$, $\lambda_y^0$, and $\lambda_z^0$ are mounting deviation angles between the IMU and the GNSS antenna.

Step S 104: Construct a system state equation, where a state variable of the system state equation includes the mounting deviation angle between the INS and the GNSS antenna.

Usually, an original state equation in the integrated positioning system is an equation constructed based on an inertial navigation error model, and a state variable of the state equation is an inertial navigation error, for example, a position error, a velocity error, an attitude error, an accelerometer zero deviation, or a gyroscope zero deviation. In this embodiment of this application, the error model of the mounting deviation angle between the IMU and the GNSS antenna may be introduced into the original state equation, so that a state variable of a new state equation includes both an inertial navigation error related variable and an error in the mounting deviation angle between the IMU and the GNSS antenna.

In an embodiment, a new system state equation that is of the integrated positioning system and that is defined in this embodiment of this application includes:

$$X = [X_1, X_2] \qquad (7)$$

Herein, $X_1$ and $X_2$ are state variables, $X_1$ is an inertial navigation error, and $X_2$ is the mounting deviation angle between the IMU and the GNSS antenna.

Therefore, a system state equation of $X_1$ is:

$$\dot{X}_1 = F_1 X_1 + G_1 W_1 \qquad (8)$$

Herein, $\dot{X}_1$ is a derivative of the inertial navigation error $X_1$; $F_1$ is a system matrix that may be derived from the inertial navigation error model, for example, a nonlinear transfer matrix of the inertial navigation error model; and $G_1$ and $W_1$ are inertial navigation error driving noise. Herein, $G_1$ may be a noise driving matrix of the inertial navigation error, and $W_1$ may be a state noise matrix of the inertial navigation error. Optionally, both $G_1$ and $W_1$ are Gaussian white noise.

For example, $X_1=[\varphi_E,\ \varphi_N,\ \varphi_U,\ \delta v_E,\ \delta v_N,\ \delta v_U,\ \delta\lambda,\ \delta L,\ \delta H,\ \varepsilon_x,\ \varepsilon_y,\ \varepsilon_z,\ \nabla_x,\ \nabla_y,\ \nabla_z]$.

Herein, $\varphi_E$, $\varphi_N$, and $\varphi_U$ are respectively platform misalignment angles in east, north, and sky directions, $\delta v_E$, $\delta v_N$, and $\delta v_U$ are respectively velocity errors of the INS in the east, north, and sky directions, $\delta\lambda$, $\delta L$, and $\delta H$ are respectively a longitude error, a latitude error, and a height error of the INS, $\varepsilon_x$, $\varepsilon_y$, and $\varepsilon_z$ are components of a gyroscope random constant drift in X, Y, and Z axes, and $\nabla_x$, $\nabla_y$, and $\nabla_z$ are components of the accelerometer zero deviation of the INS in the X, Y, and Z axes. It can be understood that parameter items included in $X_1$ are merely used as an example, and do not constitute a limitation on $X_1$. In some other implementations, $X_1$ may include more parameter items or fewer parameter items. This is not specifically described herein in this embodiment of this application.

In addition, a system state equation of $X_2$ is:

$$\dot{X}_2 = F_2 X_2 + G_2 W_2 \tag{9}$$

Herein, $\dot{X}_2$ is a derivative of the mounting deviation angle $X_2$ between the IMU and the GNSS antenna; $F_2$ is a system matrix that may be derived from the error model of the mounting deviation angle between the IMU and the GNSS antenna, for example, may be a nonlinear transfer matrix of the error model; and $G_2$ and $W_2$ are error driving noise of the mounting deviation angle between the IMU and the GNSS antenna. Herein, $G_2$ may be a noise driving matrix of the error in the mounting deviation angle between the IMU and the GNSS antenna, and $W_2$ may be a state noise matrix of the error in the mounting deviation angle between the IMU and the GNSS antenna. Optionally, both $G_2$ and $W_2$ are Gaussian white noise.

For example, $X_2=[\lambda_x^0,\ \lambda_y^0,\ \lambda_z^0]$ .

Herein, $\lambda_x^0$ is the mounting deviation angle in the direction of the X-axis, $\lambda_y^0$ is the mounting deviation angle in the direction of the Y-axis, and $\lambda_z^0$ is the mounting deviation angle in the direction of the Z-axis. It can be understood that parameter items included in $X_2$ are merely used as an example, and do not constitute a limitation on $X_2$. In some other implementations, $X_2$ may include more parameter items or fewer parameter items. This is not specifically described herein in this embodiment of this application.

In addition, if the error in the mounting deviation angle between the IMU and the GNSS antenna is $\lambda_g^0$ , a system state equation corresponding to $\lambda_g^0$ is:

$$\dot{\lambda}_g^0 = 0$$

Herein, $\dot{\lambda}_g^0$ is a derivative of $\lambda_g^0$ .

Formula (7) to Formula (9) constitute a system state equation of the integrated positioning system in this embodiment of this application. It can be learned that the state variable of the system state equation includes both the inertial navigation error and the mounting deviation angle between the IMU and the GNSS antenna. Therefore, when the state variable of the system state equation is estimated online subsequently by using the integrated positioning filter, the mounting deviation angle between the IMU and the GNSS antenna can be simultaneously calibrated online.

Step S105: Construct a system observation equation, where an observation member of the system observation equation includes an observation matrix corresponding to the mounting deviation angle that is between the INS and the GNSS antenna and that is determined based on the error model.

Specifically, the observation member of the system observation equation is an observation matrix corresponding to the inertial navigation error and an observation matrix corresponding to the error in the mounting deviation angle between the IMU and the GNSS antenna.

In an embodiment, the system observation equation may be:

$$Z = HX + V = [H_1 \quad H_2 \quad H_3]$$

Herein, Z is a system observation member, H is a system observation matrix, X is a new system state equation constructed in step S105 in this embodiment of this application, and V is a system observation noise matrix. Further, $H_1$ is an observation matrix corresponding to the attitude error, $H_2$ is an observation matrix corresponding to another state variable other than the attitude error in the error model, and $H_3$ is an observation matrix corresponding to the mounting deviation angle between the IMU and the GNSS antenna. $H_2$ may be obtained based on the inertial navigation error model, and $H_1$ and $H_3$ are as follows:

$$H_1 = \begin{bmatrix} -\dfrac{T_{22}}{\sqrt{1-T_{32}{}^2}} & \dfrac{T_{12}}{\sqrt{1-T_{32}{}^2}} & 0 \\ \dfrac{T_{21}T_{33}-T_{31}T_{23}}{T_{33}{}^2+T_{31}{}^2} & \dfrac{T_{31}T_{13}-T_{11}T_{33}}{T_{33}{}^2+T_{31}{}^2} & 0 \\ \dfrac{T_{12}T_{32}}{T_{12}{}^2+T_{22}{}^2} & \dfrac{T_{22}T_{32}}{T_{12}{}^2+T_{22}{}^2} & -1 \end{bmatrix}$$

$$H_3 = \begin{bmatrix} \dfrac{T_{33}}{\sqrt{1-T_{32}{}^2}} & 0 & \dfrac{-T_{31}}{\sqrt{1-T_{32}{}^2}} \\ \dfrac{-T_{31}T_{32}}{T_{33}{}^2+T_{31}{}^2} & 1 & \dfrac{-T_{32}T_{33}}{T_{33}{}^2+T_{31}{}^2} \\ \dfrac{T_{12}T_{23}-T_{13}T_{22}}{T_{12}{}^2+T_{22}{}^2} & 0 & \dfrac{T_{11}T_{22}-T_{12}T_{21}}{T_{12}{}^2+T_{22}{}^2} \end{bmatrix}$$

Step S106: Perform filtering calculation on the system state equation and the system observation equation by using the integrated positioning filter, to obtain an optimal estimation result of the mounting deviation angle between the IMU and the GNSS antenna.

In a specific implementation, the integrated positioning filter may be a Kalman filter. To be specific, Kalman filtering is performed on the system state equation and the system observation equation, to obtain an optimal estimation result of a heading mounting deviation angle between the IMU and the GNSS.

Step S 107: Compensate for the positioning result of the GNSS based on the optimal estimation result of the mounting deviation angle between the IMU and the GNSS antenna.

In this way, an inconsistency that exists between an actual mounting position relationship between the GNSS and the IMU and a coordinate system position relationship between the GNSS and the IMU and that is caused by the mounting deviation angle is eliminated, to eliminate an integrated positioning error caused by the mounting deviation angle, and improve positioning precision of the integrated positioning system.

In addition, in this embodiment of this application, an inertial navigation calculation result, for example, a position, a velocity, or an attitude may be further corrected based on an optimal estimation result that is of a state variable and that is obtained through Kalman filtering, to correct an accumulated error of the inertial navigation calculation result, and improve the positioning precision of the integrated positioning system.

Step S108: When a filtering calculation result of the integrated positioning filter converges, the optimal estimation result of the mounting deviation angle between the IMU and the GNSS antenna is stored in a configuration file as the calibration result.

Subsequently, if a mounting position relationship between the IMU and the GNSS does not change, the mounting deviation angle between the IMU and the GNSS antenna does not change, and the filtering calculation result of the Kalman filter is always in a convergent state. If the mounting position relationship between the IMU and the GNSS changes when the vehicle vibrates, the vehicle is repaired, or the like in a running process, when the filtering calculation result of the Kalman filter enters the convergent state again after being in a non-convergent state temporarily, the optimal estimation result of the mounting deviation angle between the IMU and the GNSS antenna changes. After the Kalman filter performs convergence again, the integrated positioning system may store a latest calibration result in the configuration file.

It can be learned that, in the method in this embodiment of this application, the mounting deviation angle between the IMU and the GNSS antenna is integrated into the state variable of the integrated positioning system, to calibrate (that is, online calibrate) the mounting deviation angle between the IMU and the GNSS antenna of the integrated positioning system in the running process of the vehicle. In a calibration process, physical structures of the IMU and the GNSS do not need to be considered, and calibration precision is high. In addition, in the method in this embodiment of this application, a dedicated calibration tool does not need to be used, and calibration can be completed provided that the vehicle is motivated. An operation is simple and fast. In addition, when the mounting position relationship between the IMU and the GNSS changes, the calibration result can be updated online in the method in this embodiment of this application, to always ensure accuracy of the integrated positioning system.

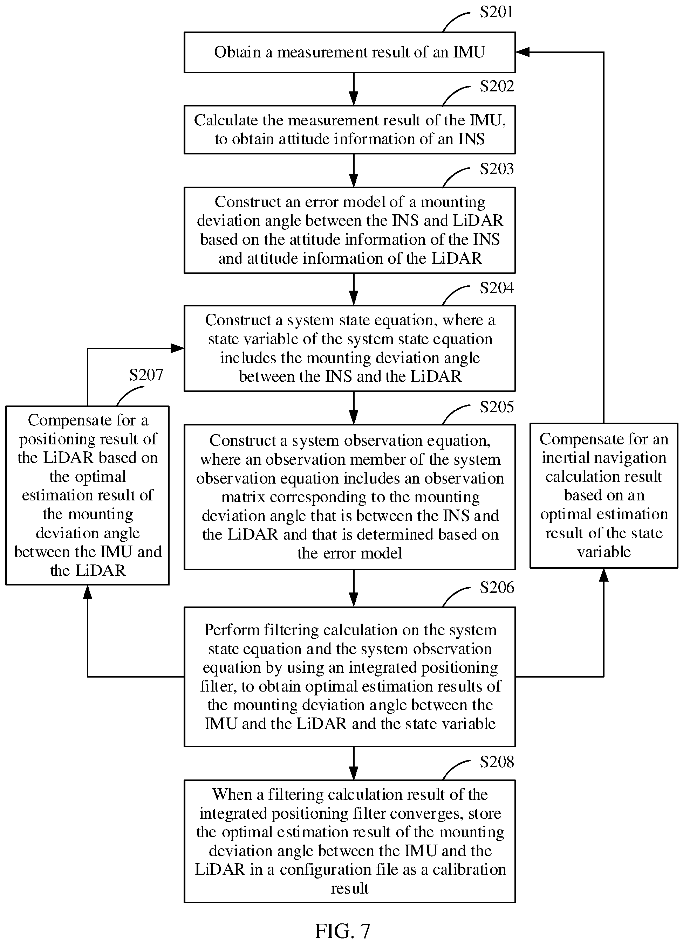

FIG. 7 is a flowchart in which a method for calibrating a mounting deviation angle between sensors is applied to calibration of a mounting deviation angle between an IMU and LiDAR according to an embodiment of this application. As shown in FIG. 7, the method may include the following steps.

Step S201: Obtain a measurement result of the IMU.

The measurement result of the IMU may include, for example, an angular velocity and acceleration information measured by the IMU.

Step S202: Calculate the measurement result of the IMU, to obtain attitude information of an INS.

For specific implementations of step S201 and step S202, refer to step S101 and step S102. Details are not described herein.

Step S203: Construct an error model of a mounting deviation angle between the INS and the LiDAR based on the attitude information of the INS and attitude information of the LiDAR.

A parameter of the error model may be expressed based on a state variable of an integrated positioning filter.

In an embodiment, to construct an error model of the mounting deviation angle between the IMU and the LiDAR, an attitude matrix $C_m^{n'}$ corresponding to the INS and an attitude matrix $C_l^n$ corresponding to the LiDAR may be constructed in this embodiment of this application.

For a specific implementation of the attitude matrix $C_m^{n'}$, refer to content described in step S103 and Formula (1) in embodiments of this application. Details are not described herein again.

The attitude matrix $C_l^n$ may be, for example, a $3 \times 3$ matrix, and indicates that an attitude output by the LiDAR is mapped from a LiDAR coordinate system (Xl, Yl, Zl) to an environmental coordinate system (E, N, U) through translation, rotation, and the like.

For example, an attitude matrix $C_m^{n'}$ corresponding to the IMU and the attitude matrix $C_l^n$ corresponding to the LiDAR may be expressed by using Formula (10):

$$C_m^{n'} = \begin{bmatrix} T_{11}^m & T_{12}^m & T_{13}^m \\ T_{21}^m & T_{22}^m & T_{23}^m \\ T_{31}^m & T_{32}^m & T_{33}^m \end{bmatrix}, C_g^n = \begin{bmatrix} T_{11}^l & T_{12}^l & T_{13}^l \\ T_{21}^l & T_{22}^l & T_{23}^l \\ T_{31}^l & T_{32}^l & T_{33}^l \end{bmatrix} \tag{10}$$

Parameters such as $T_{11}^m$ and $T_{12}^m$ in the attitude matrix $C_m^{n'}$ are used to represent parameters such as translation and rotation that need to be used to map an attitude output by the INS from a rear axle ground projection coordinate system (Xm, Ym, Zm) to the environmental coordinate system (E, N, U). Parameters such as $T_{11}^l$ and $T_{12}^l$ in the attitude matrix $C_l^n$ are used to represent parameters such as translation and rotation that need to be used to map the attitude output by the LiDAR from the LiDAR coordinate system (Xl, Yl, Zl) to the environmental coordinate system (E, N, U).

In addition, to facilitate description, a roll angle output by the IMU through calculation is denoted as $\gamma_m$, a pitch angle is denoted as $\theta_m$, a heading angle is denoted as $\varphi_m$, a roll angle output by the LiDAR through positioning is denoted as $\gamma_l$, a pitch angle is denoted as $\theta_l$, and a heading angle is denoted as $\varphi_l$ herein in this embodiment of this application. Then, an attitude observation member of an integrated positioning system may be expressed as Formula (11):

$$\begin{cases} \delta\gamma_1 = \gamma_m - \gamma_l \\ \delta\theta_1 = \theta_m - \theta_l \\ \delta\varphi_1 = \varphi_m - \varphi_l \end{cases} \tag{11}$$

Herein, $\delta\gamma_1$ denotes a deviation between roll angles output by the IMU and the LiDAR, $\delta\theta_1$ denotes a deviation between pitch angles output by the IMU and the LiDAR, and $\delta\varphi_1$ denotes a deviation between heading angles output by the IMU and the LiDAR. To facilitate general description, the deviations are referred to as an attitude deviation between the IMU and the LiDAR in this embodiment of this application.

It should be additionally noted that, in a positioning and navigation process of automated driving of a vehicle, a heading angle obviously affect precision of a positioning result. Therefore, in this embodiment of this application, output of only a heading mounting deviation angle between the IMU and the LiDAR may be considered when the calibration result is subsequently output.

Further, in this embodiment of this application, the attitude matrix $C_m^{n'}$ corresponding to the INS may be transformed as follows, to construct a transfer relationship equation from the attitude matrix corresponding to the INS to the attitude matrix corresponding to the LiDAR, so as to establish a connection between the attitude matrix corresponding to the INS and the attitude matrix $C_l^n$ corresponding to the GNSS.

The attitude matrix $C_m^{n'}$ may be decomposed into two transformation matrices, namely, $C_n^{n'}$ and $C_m^n$. In addition, $C_m^{n'} = C_n^{n'} C_m^n$. Herein, $C_n^{n'}$ may be, for example, a 3 × 3 matrix, and indicates that the attitude is mapped, through translation, rotation, and the like, from the environmental coordinate system (E, N, U) to the environmental coordinate system (Xn', Yn', Zn') having an error; and $C_m^n$ may be, for example, a 3 × 3 matrix, and indicates that the attitude is mapped from the rear axle ground projection coordinate system (Xm, Ym, Zm) to the environmental coordinate system (E, N, U) through translation, rotation, and the like. $C_m^n$ may be further decomposed into two transformation matrices, namely, $C_l^n$ and $C_m^l$. In addition, $C_m^n = C_l^n C_m^l$. Herein, $C_l^n$ may be, for example, a 3 × 3 matrix, and indicates that the attitude is mapped from the LiDAR coordinate system (X$_1$, Y$_1$, Z$_1$) to the environmental coordinate system (E, N, U) through translation, rotation, and the like; and $C_m^i$ may be, for example, a 3 × 3 matrix, and indicates that the attitude is mapped from the rear axle ground projection coordinate system (Xm, Ym, Zm) to the LiDAR coordinate system (X$_1$, Y$_1$, Z$_1$) through translation, rotation, and the like.

Further, Formula (12) is obtained:

$$C_m^{n'} = C_n^{n'} C_m^n = C_n^{n'} C_l^n C_m^l \qquad (12)$$

Further, in this embodiment of this application, an attitude error of the INS and the mounting deviation angle between the IMU and the LiDAR may be introduced into the state variable of the integrated positioning filter based on Formula (12).

For example, an attitude error φ that is of the INS and that is described by using an east-north-sky coordinate system may be:

$$\varphi = [\varphi_E \varphi_N \varphi_U]^T$$

Herein, φ$_E$ is an E-axis attitude error of the INS, φ$_N$ is an N-axis attitude error of the INS, and φ$_U$ is a U-axis attitude error of the INS. Therefore:

$$C_n^{n'} = (I - \varphi \times)$$

Herein, φ× denotes a cross product of φ, and I is an identity matrix:

$$I = \begin{bmatrix} 1 & 0 & 0 \\ 0 & 1 & 0 \\ 0 & 0 & 1 \end{bmatrix}$$

For example, the mounting deviation angle λ$^1$ between the IMU and the LiDAR may be:

$$\lambda^l = [\lambda_x^1 \ \lambda_y^1 \ \lambda_z^1]^T$$

Herein, $\lambda_x^1$ is the mounting deviation angle in the direction of the X-axis, $\lambda_y^1$ is the mounting deviation angle in the direction of the Y-axis, and $\lambda_z^1$ is the mounting deviation angle in the direction of the Z-axis. Therefore:

$$C_m^l = (I - \lambda^1 \times)$$

Herein, $\lambda^1 \times$ denotes a cross product of $\lambda^1$.

Therefore, Formula (13) may be further obtained based on Formula (12):

$$C_m^{n'} = C_n^{n'} C_m^n = C_n^{n'} C_l^n C_m^l$$

$$= (I - \varphi \times) C_l^n (I + \lambda^1 \times)$$

$$\approx C_l^n - \varphi \times C_l^n + C_l^n \lambda^1 \times \qquad (13)$$

Formula (13) may be used as the transfer relationship equation from the attitude matrix corresponding to the INS to the attitude matrix corresponding to the LiDAR.

Next, a relationship between elements in the attitude matrix $C_m^{n'}$ corresponding to the INS and the attitude matrix $C_l^n$ corresponding to the LiDAR may be derived as shown in formula (14) by combining Formula (10), Formula (11), and Formula (13):

$$\begin{cases} tan\gamma_m = \tan(\gamma_l + \delta\gamma_1) = -\frac{T_{31}^m}{T_{33}^m} = \frac{T_{11}^l \varphi_N - T_{21}^l \varphi_E + T_{31}^l + T_{32}^l \lambda_z^1 - T_{33}^l \lambda_y^1}{T_{13}^l \varphi_N - T_{23}^l \varphi_E + T_{31}^l \lambda_y^1 - T_{32}^l \lambda_x^1 + T_{33}^l} \\ sin\theta_m = \sin(\theta_l + \delta\theta_1) = T_{32}^m = T_{12}^l \varphi_N - T_{22}^l \varphi_E - T_{31}^l \lambda_z^1 + T_{32}^l + T_{33}^l \lambda_x^1 \\ tan\varphi_m = \tan(\varphi_l + \delta\varphi_1) = -\frac{T_{12}^m}{T_{22}^m} = -\frac{T_{11}^l \lambda_z^1 + T_{12}^l + T_{13}^l \lambda_x^1 + T_{22}^l \varphi_U - T_{32}^l \varphi_N}{T_{12}^l \varphi_U - T_{21}^l \lambda_z^1 + T_{22}^l + T_{23}^l \lambda_z^1 - T_{32}^l \varphi_E} \end{cases} \qquad (14)$$

A left end of Formula (14) is expanded based on a Tyler series, and a higher order term above a second order in the formula is ignored, so that Formula (15) is obtained:

$$\begin{cases} Z_1 = \gamma_m - \gamma_l = \frac{T_{21}^l T_{33}^l - T_{23}^l T_{31}^l}{T_{31}^{l\,2} + T_{33}^{l\,2}} \varphi_E + \frac{T_{13}^l T_{31}^l - T_{11}^l T_{33}^l}{T_{31}^{l\,2} + T_{33}^{l\,2}} \varphi_N - \frac{T_{31}^l T_{32}^l}{T_{31}^{l\,2} + T_{33}^{l\,2}} \lambda_x^1 + \lambda_y^1 - \frac{T_{32}^l T_{33}^l}{T_{31}^{l\,2} + T_{33}^{l\,2}} \lambda_z^1 \\ Z_2 = \theta_m - \theta_l = -\frac{T_{22}^l}{\sqrt{1 - T_{32}^{l\,2}}} \varphi_E + \frac{T_{12}^l}{\sqrt{1 - T_{32}^{l\,2}}} \varphi_N + \frac{T_{33}^l}{\sqrt{1 - T_{32}^{l\,2}}} \lambda_x^1 - \frac{T_{31}^l}{\sqrt{1 - T_{32}^{l\,2}}} \lambda_z^1 \\ Z_3 = \varphi_m - \varphi_l = \frac{T_{12}^l T_{32}^l}{T_{12}^{l\,2} + T_{22}^{l\,2}} \varphi_E + \frac{T_{22}^l T_{32}^l}{T_{12}^{l\,2} + T_{22}^{l\,2}} \varphi_N - \varphi_U - \frac{T_{13}^l T_{22}^l - T_{12}^l T_{23}^l}{T_{12}^{l\,2} + T_{22}^{l\,2}} \lambda_x^1 - \frac{T_{12}^l T_{21}^l - T_{11}^l T_{22}^l}{T_{12}^{l\,2} + T_{22}^{l\,2}} \lambda_z^1 \end{cases} \qquad (15)$$

Formula (15) may be referred to as the error model of the mounting deviation angle between the IMU and the LiDAR. Herein, $Z_1$, $Z_2$, and $Z_3$ are observation members of the error model; $\varphi_E$, $\varphi_N$, and $\varphi_U$ are attitude errors of the INS, for example, a platform error angle; and $\lambda_x^1$, $\lambda_y^1$, and $\lambda_z^1$ are mounting deviation angles between the IMU and the LiDAR.

Step S204: Construct a system state equation, where a state variable of the system state equation includes the mounting deviation angle between the INS and the LiDAR.

Usually, an original state equation in the integrated positioning system is an equation constructed based on an inertial navigation error model, and a state variable of the state equation is an inertial navigation error, for example, a position error, a velocity error, an attitude error, an accelerometer zero deviation, or a gyroscope zero deviation. In this embodiment of this application, the error model of the mounting deviation angle between the IMU and the LiDAR may be introduced into the original state equation, so that a state variable of a new state equation includes both an inertial navigation error related variable and a variable related to an error in the mounting deviation angle between the IMU and the LiDAR.

In an embodiment, a new system state equation that is of the integrated positioning system and that is defined in this embodiment of this application includes:

$$X = [X_1, X_3] \qquad (16)$$

Herein, $X_1$ is the inertial navigation error in the state variable, and $X_3$ is the mounting deviation angle between the IMU and the LiDAR.

Therefore, a system state equation of $X_1$ is:

$$\dot{X}_1 = F_1 X_1 + G_1 W_1 \tag{17}$$

Herein, $\dot{X}_1$ is a derivative of the inertial navigation error $X_1$; $F_1$ is a system matrix that may be derived from the inertial navigation error model, for example, a nonlinear transfer matrix of the inertial navigation error model; and $G_1$ and $W_1$ are inertial navigation error driving noise. Herein, $G_1$ may be a noise driving matrix of the inertial navigation error, and $W_1$ may be a state noise matrix of the inertial navigation error. Optionally, both $G_1$ and $W_1$ are Gaussian white noise.

For example, $X_1 = [\varphi_E, \varphi_N, \varphi_U, \delta v_E, \delta v_N, \delta v_U, \delta\lambda, \delta L, \delta H, \varepsilon_x, \varepsilon_y, \varepsilon_z, \nabla_x, \nabla_y, \nabla_z]$.

Herein, $\varphi_E$, $\varphi_N$, and $\varphi_U$ are respectively platform misalignment angles in east, north, and sky directions, $\delta v_E$, $\delta v_N$, and $\delta v_U$ are respectively velocity errors of the INS in the east, north, and sky directions, $\delta\lambda$, $\delta L$, and $\delta H$ are respectively a longitude error, a latitude error, and a height error of the INS, $\varepsilon_x$, $\varepsilon_y$, and $\varepsilon_z$ are components of a gyroscope random constant drift in X, Y, and Z axes, and $\nabla_x$, $\nabla_y$, and $\nabla_z$ are components of the accelerometer zero deviation of the INS in the X, Y, and Z axes. It can be understood that parameter items included in $X_1$ are merely used as an example, and do not constitute a limitation on $X_1$. In some other implementations, $X_1$ may include more parameter items or fewer parameter items. This is not specifically described herein in this embodiment of this application.

In addition, a system state equation of $X_2$ is:

$$\dot{X}_3 = F_3 X_3 + G_3 W_3 \tag{18}$$

Herein, $\dot{X}_3$ is a derivative of the mounting deviation angle $X_3$ between the IMU and the LiDAR; $F_3$ is a system matrix that may be derived from the error model of the mounting deviation angle between the IMU and the LiDAR, for example, may be a nonlinear transfer matrix of the error model; and $G_3$ and $W_3$ are error driving noise of the mounting deviation angle between the IMU and the LiDAR. Herein, $G_3$ may be a noise driving matrix of the error in the mounting deviation angle between the IMU and the LiDAR, and $W_3$ may be a state noise matrix of the error in the mounting deviation angle between the IMU and the LiDAR. Optionally, both $G_3$ and $W_3$ are Gaussian white noise. For example, $X_3 = [\lambda_x^1, \lambda_y^1, \lambda_z^1]$.

Herein, $\lambda_x^1$ is a mounting deviation angle between the IMU and the LiDAR in the direction of the X-axis, $\lambda_y^1$ is a mounting deviation angle between the IMU and the LiDAR in the direction of the Y-axis, and $\lambda_z^1$ is a mounting deviation angle between the IMU and the LiDAR in the direction of the Z-axis. It can be understood that parameter items included in $X_3$ are merely used as an example, and do not constitute a limitation on $X_3$. In some other implementations, $X_3$ may include more parameter items or fewer parameter items. This is not specifically described herein in this embodiment of this application.

In addition, if the error in the mounting deviation angle between the IMU and the LiDAR is $\lambda_g^1$, a system state equation corresponding to $\lambda_g^1$ is:

$$\dot{\lambda}_g^1 = 0$$

Herein, $\dot{\lambda}_g^1$ is a derivative of $\lambda_g^1$.

Formula (16) to Formula (18) constitute a system state equation of the integrated positioning system in this embodiment of this application. It can be learned that the state variable of the system state equation includes both the inertial navigation error and the mounting deviation angle between the IMU and the LiDAR. Therefore, when the state variable of the system state equation is estimated online subsequently by using the integrated positioning filter, the mounting deviation angle between the IMU and the LiDAR can be simultaneously calibrated online.

Step S205: Construct a system observation equation, where an observation member of the system observation equation includes an observation matrix corresponding to the mounting deviation angle that is between the INS and the LiDAR and that is determined based on the error model.

Specifically, the observation member of the system observation equation is an observation matrix corresponding to the inertial navigation error and an observation matrix corresponding to the error in the mounting deviation angle between the IMU and the LiDAR.

In an embodiment, the system observation equation may be:

$$Z = HX + V = [H_1 \quad H_2 \quad H_3]$$

Herein, Z is a system observation member, H is a system observation matrix, X is a new system state equation constructed in step S205 in this embodiment of this application, and V is a system observation noise matrix. Further, $H_1$ is an observation matrix corresponding to the attitude error, $H_2$ is an observation matrix corresponding to another state variable other than the attitude error in the error model, and $H_3$ is an observation matrix corresponding to the mounting deviation angle between the IMU and the LiDAR. $H_2$ may be obtained based on the inertial navigation error model, and $H_1$ and $H_3$ are as follows:

$$H_1 = \begin{bmatrix} -\dfrac{T_{22}}{\sqrt{1 - T_{32}^2}} & \dfrac{T_{12}}{\sqrt{1 - T_{32}^2}} & 0 \\ \dfrac{T_{21}T_{33} - T_{31}T_{23}}{T_{33}^2 + T_{31}^2} & \dfrac{T_{31}T_{13} - T_{11}T_{33}}{T_{33}^2 + T_{31}^2} & 0 \\ \dfrac{T_{12}T_{32}}{T_{12}^2 + T_{22}^2} & \dfrac{T_{22}T_{32}}{T_{12}^2 + T_{22}^2} & -1 \end{bmatrix}$$

$$H_3 = \begin{bmatrix} \dfrac{T_{33}}{\sqrt{1 - T_{32}^2}} & 0 & \dfrac{-T_{31}}{\sqrt{1 - T_{32}^2}} \\ \dfrac{-T_{31}T_{32}}{T_{33}^2 + T_{31}^2} & 1 & \dfrac{-T_{32}T_{33}}{T_{33}^2 + T_{31}^2} \\ \dfrac{T_{12}T_{23} - T_{13}T_{22}}{T_{12}^2 + T_{22}^2} & 0 & \dfrac{T_{11}T_{22} - T_{12}T_{21}}{T_{12}^2 + T_{22}^2} \end{bmatrix}$$

Step S206: Perform filtering calculation on the system state equation and the system observation equation by using the integrated positioning filter, to obtain an optimal estimation result of the mounting deviation angle between the IMU and the LiDAR.

In a specific implementation, the integrated positioning filter may be a Kalman filter. To be specific, Kalman filtering is performed on the system state equation and the system observation equation, to obtain an optimal estimation result of the mounting deviation angle between the IMU and the LiDAR.

Step S207: Compensate for the positioning result of the LiDAR based on the optimal estimation result of the mounting deviation angle between the IMU and the LiDAR.

In this way, an inconsistency that exists between an actual mounting position relationship between the LiDAR and the IMU and a coordinate system position relationship between the GNSS and the IMU and that is caused by the mounting deviation angle is eliminated, to eliminate an integrated positioning error caused by the mounting deviation angle, and improve positioning precision of the integrated positioning system.

In addition, in this embodiment of this application, an inertial navigation calculation result, for example, a position, a velocity, or an attitude may be further corrected based on an optimal estimation result that is of a state variable and that is obtained through Kalman filtering, to correct an accumulated error of the inertial navigation calculation result, and improve the positioning precision of the integrated positioning system.

Step S208: When a filtering calculation result of the integrated positioning filter converges, the optimal estimation result of the mounting deviation angle between the IMU and the LiDAR is stored in a configuration file as the calibration result.

Subsequently, if a mounting position relationship between the IMU and the LiDAR does not change, the mounting deviation angle between the IMU and the LiDAR does not change, and the filtering calculation result of the Kalman filter is always in a convergent state. If the mounting position relationship between the IMU and the LiDAR changes when the vehicle vibrates, the vehicle is repaired, or the like in a running process, when the filtering calculation result of the Kalman filter enters the convergent state again after being in a non-convergent state temporarily, the optimal estimation result of the mounting deviation angle between the IMU and the LiDAR changes. After the Kalman filter performs convergence again, the integrated positioning system may store a latest calibration result in the configuration file.

It can be learned that, in the method in this embodiment of this application, the mounting deviation angle between the IMU and the LiDAR is integrated into the state variable of the integrated positioning system, to calibrate (that is, online calibrate) the mounting deviation angle between the IMU and the LiDAR of the integrated positioning system in the running process of the vehicle. In a calibration process, physical structures of the IMU and the LiDAR do not need to be considered, and calibration precision is high. In addition, in the method in this embodiment of this application, a dedicated calibration tool does not need to be used, and calibration can be completed provided that the vehicle is motivated. An operation is simple and fast. In addition, when the mounting position relationship between the IMU and the LiDAR changes, the calibration result can be updated online in the method in this embodiment of this application, to always ensure positioning precision of the integrated positioning system.

It should be additionally noted that, the method in this embodiment of this application can be applied to an integrated positioning system including the IMU and a GNSS, to calibrate a mounting deviation angle between the IMU and a GNSS dual-antenna. The method in this embodiment of this application may be applied to an integrated positioning system including the IMU and the LiDAR, to calibrate the mounting deviation angle between the IMU and the LiDAR. The method in this embodiment of this application may be applied to an integrated positioning system including the IMU, the GNSS, and the LiDAR, to calibrate the mounting deviation angle between the IMU and the GNSS dual-antenna and the mounting deviation angle between the IMU and the LiDAR, where $X=[X_1, X_2, X_3]$.

Various solutions in which an integrated positioning system implements a method for calibrating a mounting deviation angle between sensors are described in embodiments provided in this application. It may be understood that, to achieve the foregoing functions, the integrated positioning system may include a corresponding hardware structure and/or software module for executing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In an embodiment, an integrated positioning system may implement a corresponding function by using a hardware structure shown in FIG. 4. Various sensors may be mounted in different positions of the vehicle, and a memory and a processor may be, for example, a trip computer of the vehicle, for example, an electronic control unit (electronic control unit, ECU), or an automated driving computing platform, for example, a memory and a processor in a mobile data center (mobile data center, MDC). The memory includes program instructions for implementing corresponding functions. When the program instructions are run on the processor, the integrated positioning system is enabled to perform the following steps: constructing an error model of a mounting deviation angle between the sensors based on attitude information output by the sensors; constructing a system state equation, where a state variable of the system state equation includes the mounting deviation angle; constructing a system observation equation, where an observation member of the system observation equation includes an observation matrix corresponding to the mounting deviation angle determined based on the error model; and performing filtering calculation on the system state equation and the system observation equation, and using, as a calibration result, an estimation result that is of the mounting deviation angle and that is obtained when a filtering calculation result converges.

In an embodiment, the integrated positioning system is configured to calibrate a mounting deviation angle between an IMU and a GNSS antenna. Therefore, a plurality of sensors may include at least the IMU and a GNSS receiver. The GNSS receiver includes the GNSS antenna, for example, a master antenna and a slave antenna, which is referred to as a GNSS dual-antenna. Each antenna of the IMU and a GNSS is mounted in a different position of the vehicle. When the program instructions are run on the processor, the integrated positioning system is enabled to perform the following steps, to implement the step of constructing an error model of a mounting deviation angle between the sensors based on attitude information output by the sensors: constructing an observation member of the error model based on attitude information output by an INS and the GNSS, where the observation member is an attitude deviation between the IMU and the GNSS antenna; constructing a transfer relationship equation from an attitude matrix corresponding to the INS to an attitude matrix corresponding to the GNSS; and constructing the error model by combining the observation member of the error model and the transfer relationship equation, where the error model is an error model of a mounting deviation angle between the IMU and the GNSS antenna, the attitude information includes one or more of a roll angle, a pitch angle, and a heading angle, and the transfer relationship equation includes an attitude error of the INS and the mounting deviation angle between the IMU and the GNSS antenna.

In an embodiment, when the program instructions are run on the processor, the integrated positioning system is enabled to perform the following steps, to implement the step of performing filtering calculation on the system state equation and the system observation equation, and using, as a calibration result, an optimal estimation result that is of the mounting deviation angle and that is obtained when a filtering calculation result converges: performing Kalman filtering calculation on the system state equation and the system observation equation, to obtain an optimal estimation result of the mounting deviation angle between the IMU and the GNSS antenna; compensating for a positioning result of the GNSS and correcting an inertial navigation calculation result of the INS based on the optimal estimation result; and when the filtering calculation result converges, storing the optimal estimation result of the mounting deviation angle between the IMU and the GNSS antenna in a configuration file as the calibration result.

In an embodiment, the integrated positioning system is configured to calibrate a mounting deviation angle between an IMU and LiDAR. Therefore, the plurality of sensors include at least the IMU and the LiDAR. The IMU and the LiDAR are mounted in different positions of the vehicle. When the program instructions are run on the processor, the integrated positioning system is enabled to perform the following steps, to implement the step of constructing an error model of a mounting deviation angle between the sensors based on attitude information output by the sensors: constructing an observation member of the error model based on attitude information output by an INS and the LiDAR, where the observation member is an attitude deviation between the IMU and the LiDAR; constructing a transfer relationship equation from an attitude matrix corresponding to the INS to an attitude matrix corresponding to the LiDAR; constructing the error model by combining the observation member of the error model and the transfer relationship equation, where the error model is an error model of a mounting deviation angle between the IMU and the LiDAR, where the attitude information includes one or more of a roll angle, a pitch angle, and a heading angle, and the transfer relationship equation includes an attitude error of the INS and the mounting deviation angle between the IMU and the LiDAR.

In an embodiment, when the program instructions are run on the processor, the integrated positioning system is enabled to perform the following steps, to implement the step of performing filtering calculation on the system state equation and the system observation equation, and using, as a calibration result, an optimal estimation result that is of the mounting deviation angle and that is obtained when a filtering calculation result converges includes: performing Kalman filtering calculation on the system state equation and the system observation equation, to obtain an optimal estimation result of the mounting deviation angle between the IMU and the LiDAR; compensating for a positioning result of the LiDAR and correcting an inertial navigation calculation result of the INS based on the optimal estimation result; and when the filtering calculation result converges, storing the optimal estimation result of the mounting deviation angle between the IMU and the LiDAR in a configuration file as the calibration result.

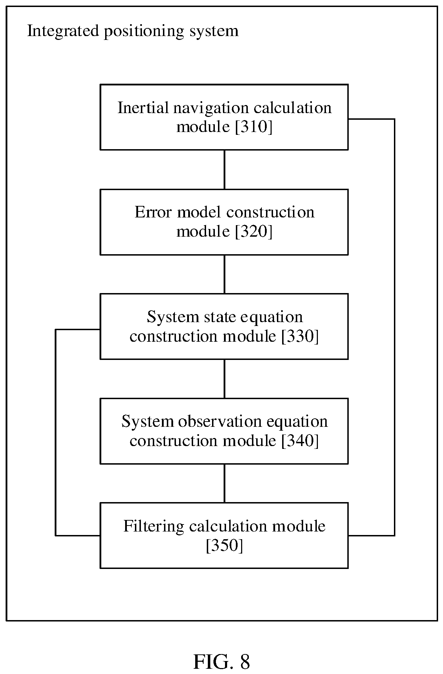

In another embodiment, an integrated positioning system may implement a corresponding function by using a software module shown in FIG. 8. As shown in FIG. 8, the integrated positioning system may include an inertial navigation calculation module 310, an error model construction module 320, a system state equation construction module 330, a system state equation construction module 340, and a filtering calculation module 350. The following describes functions of the modules in detail:

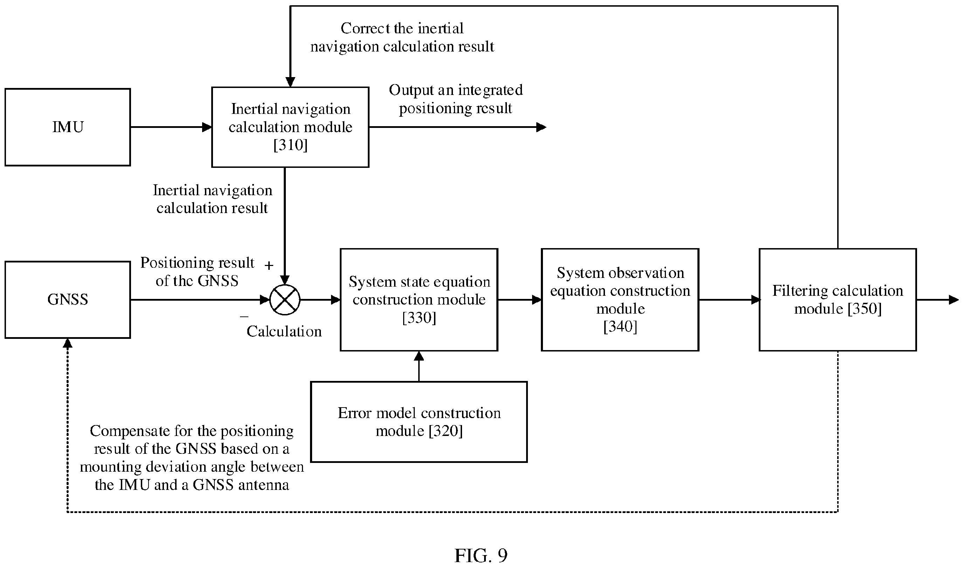

As shown in FIG. 9, when the integrated positioning system is configured to calibrate a mounting deviation angle between an IMU and a GNSS antenna:

The inertial navigation calculation module 310 is configured to perform inertial navigation calculation on a measurement result of the IMU, to obtain attitude information of an INS.

The error model construction module 320 is configured to construct an error model of a mounting deviation angle between the INS and the GNSS antenna based on the attitude information of the INS and attitude information of the GNSS.

The system state equation construction module 330 is configured to construct a system state equation, where a state variable of the system state equation includes the mounting deviation angle between the INS and the GNSS antenna. The system observation equation construction module 340 is configured to construct a system observation equation, where an observation member of the system observation equation includes an observation matrix corresponding to the mounting deviation angle that is between the INS and the GNSS antenna and that is determined based on the error model.

The filtering calculation module 350 is configured to: perform filtering calculation on the system state equation and the system observation equation, and use, as a calibration result, an estimation result that is of the mounting deviation angle between the INS and the GNSS antenna and that is obtained when a filtering calculation result converges.

In an embodiment, the error model construction module 320 may be specifically configured to: construct an observation member of the error model based on attitude information output by the INS and the GNSS; construct a transfer relationship equation from an attitude matrix corresponding to the INS to an attitude matrix corresponding to the GNSS; construct the error model by combining the observation member of the error model and the transfer relationship equation, where the attitude information includes one or more of a roll angle, a pitch angle, and a heading angle, and the transfer relationship equation includes an attitude error of the INS and the mounting deviation angle between the IMU and the GNSS antenna.

In an embodiment, the filtering calculation module 350 may be specifically configured to: perform Kalman filtering calculation on the system state equation and the system observation equation, to obtain an optimal estimation result of the mounting deviation angle between the IMU and the GNSS antenna; compensate for a positioning result of the GNSS and correct an inertial navigation calculation result of the INS, based on the optimal estimation result; and

when the filtering calculation result converges, store the optimal estimation result of the mounting deviation angle between the IMU and the GNSS antenna in a configuration file as the calibration result.

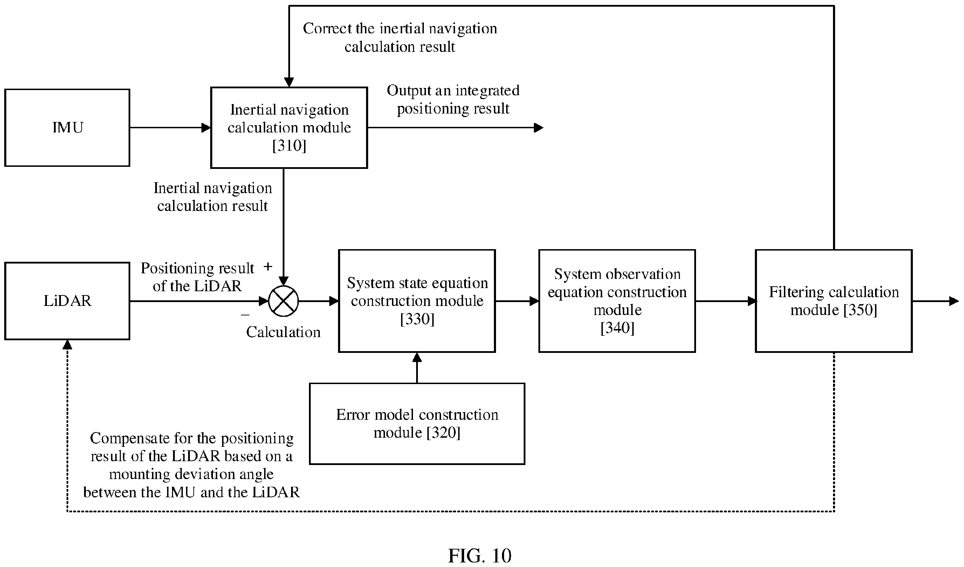

Further, as shown in FIG. 10, when the integrated positioning system is configured to calibrate a mounting deviation angle between an IMU and LiDAR:

The inertial navigation calculation module 310 is configured to perform inertial navigation calculation on a measurement result of the IMU, to obtain attitude information of an INS.

The error model construction module 320 is configured to construct an error model of a mounting deviation angle between the INS and the LiDAR based on the attitude information of the INS and attitude information of the LiDAR. The system state equation construction module 330 is configured to construct a system state equation, where a state variable of the system state equation includes the mounting deviation angle between the INS and the LiDAR.

The system observation equation construction module 340 is configured to construct a system observation equation, where an observation member of the system observation equation includes an observation matrix corresponding to the mounting deviation angle that is between the INS and the LiDAR and that is determined based on the error model. The filtering calculation module 350 is configured to: perform filtering calculation on the system state equation and the system observation equation, and use, as a calibration result, an estimation result that is of the mounting deviation angle between the INS and the LiDAR and that is obtained when a filtering calculation result converges.

In an embodiment, the error model construction module 320 may be specifically configured to: construct an observation member of the error model based on attitude information output by the INS and the LiDAR; construct a transfer relationship equation from an attitude matrix corresponding to the INS to an attitude matrix corresponding to the LiDAR; construct the error model by combining the observation member of the error model and the transfer relationship equation, where the attitude information includes one or more of a roll angle, a pitch angle, and a heading angle, and the transfer relationship equation includes an attitude error of the INS and the mounting deviation angle between the IMU and the LiDAR.

In an embodiment, the filtering calculation module 350 may be specifically configured to: perform Kalman filtering calculation on the system state equation and the system observation equation, to obtain an optimal estimation result of the mounting deviation angle between the IMU and the LiDAR; compensate for a positioning result of the LiDAR and correct an inertial navigation calculation result of the INS, based on the optimal estimation result; and when the filtering calculation result converges, store the optimal estimation result of the mounting deviation angle between the IMU and the LiDAR in a configuration file as the calibration result.

An embodiment of this application further provides a vehicle. The vehicle may include the integrated positioning system provided by the foregoing embodiments, and a user performs the method for calibrating a mounting deviation angle between sensors in the foregoing embodiments.

An embodiment of this application further provides a computer-readable storage medium. The computer-readable storage medium stores instructions, and when the instructions are run on a computer, the computer is enabled to perform the method in the foregoing aspects.

An embodiment of this application further provides a computer program product including instructions, and when the instructions are run on a computer, the computer is enabled to perform the method in the foregoing aspects.

In the foregoing specific implementations, the objectives, technical solutions, and benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

## Claims

1. A method for calibrating a mounting deviation angle between sensors, applied to an integrated positioning system, wherein the integrated positioning system comprises a plurality of sensors, and mounted positions of the plurality of sensors are different; and
   the method comprises:

   constructing an error model of a mounting deviation angle between the sensors based on attitude information output by the sensors;
   constructing a system state equation, wherein a state variable of the system state equation comprises the mounting deviation angle;
   constructing a system observation equation, wherein an observation member of the system observation equation comprises an observation matrix corresponding to the mounting deviation angle determined based on the error model; and

performing filtering calculation on the system state equation and the system observation equation, and using, as a calibration result, an estimation result that is of the mounting deviation angle and that is obtained when a filtering calculation result converges.

2. The method according to claim 1, wherein the plurality of sensors comprise an inertial measurement unit IMU of an inertial navigation system INS and a global navigation satellite system GNSS receiver, the GNSS receiver comprises a GNSS antenna, and mounting positions of the IMU and the GNSS antenna are different; and
the constructing an error model of a mounting deviation angle between the sensors based on attitude information output by the sensors comprises:

constructing an observation member of the error model, wherein the observation member is an attitude deviation between the IMU and the GNSS antenna;
constructing a transfer relationship equation from an attitude matrix corresponding to the INS to an attitude matrix corresponding to the GNSS; and
constructing the error model by combining the observation member of the error model and the transfer relationship equation, wherein the error model is an error model of a mounting deviation angle between the IMU and the GNSS antenna; and
the attitude information comprises one or more of a roll angle, a pitch angle, and a heading angle, and the transfer relationship equation comprises an attitude error of the INS and the mounting deviation angle between the IMU and the GNSS antenna.

3. The method according to claim 2, wherein the observation member of the error model comprises:

$$\begin{cases} \delta\gamma_0 = \gamma_m - \gamma_g \\ \delta\theta_0 = \theta_m - \theta_g \, , \\ \delta\varphi_0 = \varphi_m - \varphi_g \end{cases}$$

wherein
$\gamma_m$, $\theta_m$, $\varphi_m$ are respectively a roll angle, a pitch angle, and a heading angle that are output by the INS, and $\gamma_g$, $\theta_g$, and $\varphi_g$ are respectively a roll angle, a pitch angle, and a heading angle that are output by the GNSS.

4. The method according to claim 2 or 3, wherein the transfer relationship equation comprises:

$$C_m^{n'} \approx C_g^n - \varphi \times C_g^n + C_g^n \lambda^0 \times,$$

wherein $C_m^{n'}$ is the attitude matrix corresponding to the INS, $C_g^n$ is the attitude matrix corresponding to the GNSS, $\varphi$ is the attitude error of the INS, $\lambda^0$ is the mounting deviation angle between the IMU and the GNSS antenna, and $\lambda^0 \times$ represents a cross product of $\lambda^0$.

5. The calibration method according to any one of claims 2 to 4, wherein the system state equation comprises:

$$X=[X_1, X_2]$$

$$\dot{X}_1 = F_1 X_1 + G_1 W_1$$

$$\dot{X}_2 = F_2 X_2 + G_2 W_2,$$

wherein
$X_1$ and $X_2$ are state variables, $X_1$ is an inertial navigation error, $X_2$ is the mounting deviation angle between the IMU and the GNSS antenna, $\dot{X}_1$ is a derivative of $X_1$, $F_1$ is a system matrix of an inertial navigation error model of the integrated positioning system, $G_1$ and $W_1$ are inertial navigation error driving noise, $\dot{X}_2$ is a derivative of $X_2$, $F_2$ is a system matrix of the error model of the mounting deviation angle between the IMU and the GNSS antenna, and $G_2$

and $W_2$ are error driving noise of the mounting deviation angle between the IMU and the GNSS antenna.

6. The calibration method according to claim 5, wherein the system state equation comprises:

$$Z = HX + V = [H_1 \quad H_2 \quad H_3],$$

*wherein*

Z is a system observation member, H is a system observation matrix, X is the system state equation, V is a system observation noise matrix, $H_1$ is an observation matrix corresponding to the attitude error of the INS, $H_2$ is an observation matrix corresponding to another state variable other than the attitude error in the inertial navigation error model, and $H_3$ is an observation matrix corresponding to the mounting deviation angle between the IMU and the GNSS antenna.

7. The calibration method according to any one of claims 2 to 6, wherein the performing filtering calculation on the system state equation and the system observation equation, and using, as a calibration result, an optimal estimation result that is of the mounting deviation angle and that is obtained when a filtering calculation result converges comprises:

performing Kalman filtering calculation on the system state equation and the system observation equation, to obtain an optimal estimation result of the mounting deviation angle between the IMU and the GNSS antenna; compensating for a positioning result of the GNSS and correcting an inertial navigation calculation result of the INS based on the optimal estimation result; and when the filtering calculation result converges, storing the optimal estimation result of the mounting deviation angle between the IMU and the GNSS antenna in a configuration file as the calibration result.

8. The calibration method according to claim 1, wherein the plurality of sensors comprise an IMU and light detection and ranging LiDAR, and mounting positions of the IMU and the LiDAR are different; and the constructing an error model of a mounting deviation angle between the sensors based on attitude information output by the sensors comprises:

constructing an observation member of the error model, wherein the observation member is an attitude deviation between the IMU and the LiDAR; constructing a transfer relationship equation from an attitude matrix corresponding to an INS to an attitude matrix corresponding to the LiDAR; and constructing the error model by combining the observation member of the error model and the transfer relationship equation, wherein the error model is an error model of a mounting deviation angle between the IMU and the LiDAR; and the attitude information comprises one or more of a roll angle, a pitch angle, and a heading angle, and the transfer relationship equation comprises an attitude error of the INS and the mounting deviation angle between the IMU and the LiDAR.

9. The method according to claim 8, wherein the observation member of the error model comprises:

$$\begin{cases} \delta\gamma_1 = \gamma_{m} - \gamma_l \\ \delta\theta_1 = \theta_{m} - \theta_l \\ \delta\varphi_1 = \varphi_{m} - \varphi_l \end{cases},$$

*wherein*

$\gamma_m$, $\theta_m$, $\varphi_m$ are respectively a roll angle, a pitch angle, and a heading angle that are output by the INS, and $\gamma_l$, $\theta_l$, and $\varphi_l$ are respectively a roll angle, a pitch angle, and a heading angle that are output by the LiDAR.

10. The method according to claim 8 or 9, wherein the transfer relationship equation comprises:

$$C_m^{n'} \approx C_l^n - \varphi \times C_l^n + C_l^n \lambda^1 \times,$$

wherein

$C_m^{n'}$ is the attitude matrix corresponding to the INS, $C_l^n$ is the attitude matrix corresponding to the LiDAR, $\varphi$ is the attitude error of the INS, $\lambda^1$ is the mounting deviation angle between the IMU and the LiDAR antenna, and $\lambda^1 \times$ represents a cross product of $\lambda^1$.

11. The calibration method according to any one of claims 8 to 10, wherein the system state equation comprises:

$$X = [X_1, X_3]$$

$$\dot{X}_1 = F_1 X_1 + G_1 W_1$$

$$\dot{X}_3 = F_3 X_3 + G_3 W_3,$$

*wherein*

$X_1$ and $X_3$ are state variables, $X_1$ is an inertial navigation error, $X_3$ is the mounting deviation angle between the IMU and the LiDAR, $\dot{X}_1$ is a derivative of $X_1$, $F_1$ is a system matrix of an inertial navigation error model of the integrated positioning system, $G_1$ and $W_1$ are inertial navigation error driving noise, $\dot{X}_3$ is a derivative of $X_3$, $F_3$ is a system matrix of the error model of the mounting deviation angle between the IMU and the LiDAR, and $G_3$ and $W_3$ are error driving noise of the mounting deviation angle between the IMU and the LiDAR.

12. The calibration method according to claim 11, wherein the system state equation comprises:

$$Z = HX + V = [H_1 \quad H_2 \quad H_3],$$

*wherein*

Z is a system observation member, H is a system observation matrix, X is the system state equation, V is a system observation noise matrix, $H_1$ is an observation matrix corresponding to the attitude error of the INS, $H_2$ is an observation matrix corresponding to another state variable other than the attitude error in the inertial navigation error model, and $H_3$ is an observation matrix corresponding to the mounting deviation angle between the IMU and the LiDAR.

13. The calibration method according to any one of claims 8 to 12, wherein the performing filtering calculation on the system state equation and the system observation equation, and using, as a calibration result, an optimal estimation result that is of the mounting deviation angle and that is obtained when a filtering calculation result converges comprises:

performing Kalman filtering calculation on the system state equation and the system observation equation, to obtain an optimal estimation result of the mounting deviation angle between the IMU and the LiDAR;
compensating for a positioning result of the LiDAR and correcting an inertial navigation calculation result of the INS based on the optimal estimation result; and
when the filtering calculation result converges, storing the optimal estimation result of the mounting deviation angle between the IMU and the LiDAR in a configuration file as the calibration result.

14. An integrated positioning system, comprising a processor, a memory, and a plurality of sensors, wherein mounting positions of the plurality of sensors are different, the memory comprises program instructions, and when the program instructions are run on the processor, the integrated positioning system is enabled to perform the following steps:

constructing an error model of a mounting deviation angle between the sensors based on attitude information output by the sensors;
constructing a system state equation, wherein a state variable of the system state equation comprises the mounting deviation angle;
constructing a system observation equation, wherein an observation member of the system observation equation comprises an observation matrix corresponding to the mounting deviation angle determined based on the error model; and

performing filtering calculation on the system state equation and the system observation equation, and using, as a calibration result, an estimation result that is of the mounting deviation angle and that is obtained when a filtering calculation result converges.

15. The integrated positioning system according to claim 14, wherein the plurality of sensors comprise an inertial measurement unit IMU of an inertial navigation system INS and a global navigation satellite system GNSS receiver, the GNSS receiver comprises a GNSS antenna, and mounting positions of the IMU and the GNSS antenna are different; and

when the program instructions are run on the processor, the integrated positioning system is enabled to perform the following steps, to implement the step of constructing an error model of a mounting deviation angle between the sensors based on attitude information output by the sensors:

constructing an observation member of the error model, wherein the observation member is an attitude deviation between the IMU and the GNSS antenna;
constructing a transfer relationship equation from an attitude matrix corresponding to the INS to an attitude matrix corresponding to the GNSS; and
constructing the error model by combining the observation member of the error model and the transfer relationship equation, wherein the error model is an error model of a mounting deviation angle between the IMU and the GNSS antenna; and
the attitude information comprises one or more of a roll angle, a pitch angle, and a heading angle, and the transfer relationship equation comprises an attitude error of the INS and the mounting deviation angle between the IMU and the GNSS antenna.

16. The integrated positioning system according to claim 15, wherein when the program instructions are run on the processor, the integrated positioning system is enabled to perform the following steps, to implement the step of performing filtering calculation on the system state equation and the system observation equation, and using, as a calibration result, an optimal estimation result that is of the mounting deviation angle and that is obtained when a filtering calculation result converges:

performing Kalman filtering calculation on the system state equation and the system observation equation, to obtain an optimal estimation result of the mounting deviation angle between the IMU and the GNSS antenna;
compensating for a positioning result of the GNSS and correcting an inertial navigation calculation result of the INS based on the optimal estimation result; and
when the filtering calculation result converges, storing the optimal estimation result of the mounting deviation angle between the IMU and the GNSS antenna in a configuration file as the calibration result.

17. The integrated positioning system according to claim 14, wherein the plurality of sensors comprise an IMU and light detection and ranging LiDAR, and mounting positions of the IMU and the LiDAR are different; and

when the program instructions are run on the processor, the integrated positioning system is enabled to perform the following steps, to implement the step of constructing an error model of a mounting deviation angle between the sensors based on attitude information output by the sensors:

constructing an observation member of the error model, wherein the observation member is an attitude deviation between the IMU and the LiDAR;
constructing a transfer relationship equation from an attitude matrix corresponding to an INS to an attitude matrix corresponding to the LiDAR; and
constructing the error model by combining the observation member of the error model and the transfer relationship equation, wherein the error model is an error model of a mounting deviation angle between the IMU and the LiDAR; and
the attitude information comprises one or more of a roll angle, a pitch angle, and a heading angle, and the transfer relationship equation comprises an attitude error of the INS and the mounting deviation angle between the IMU and the LiDAR.

18. The integrated positioning system according to claim 17, wherein when the program instructions are run on the processor, the integrated positioning system is enabled to perform the following steps, to implement the step of performing filtering calculation on the system state equation and the system observation equation, and using, as a calibration result, an optimal estimation result that is of the mounting deviation angle and that is obtained when a filtering calculation result converges:

performing Kalman filtering calculation on the system state equation and the system observation equation, to obtain an optimal estimation result of the mounting deviation angle between the IMU and the LiDAR;

compensating for a positioning result of the LiDAR and correcting an inertial navigation calculation result of the INS based on the optimal estimation result; and

when the filtering calculation result converges, storing the optimal estimation result of the mounting deviation angle between the IMU and the LiDAR in a configuration file as the calibration result.

19. A vehicle, comprising an integrated positioning system, wherein the integrated positioning system comprises a processor, a memory, and a plurality of sensors, different sensors are mounted in different positions of the vehicle, the memory comprises program instructions, and when the program instructions are run on the processor, the integrated positioning system is enabled to perform the method according to any one of claims 1 to 13.

20. A computer-readable storage medium, wherein the computer-readable storage medium stores instructions, and when the instructions are run on a computer, the computer is enabled to perform the method according to any one of claims 1 to 13.

21. A computer program product, wherein when the computer program product runs on a computer, the computer is enabled to perform the method according to any one of claims 1 to 13.

FIG. 1

FIG. 2

FIG. 3

FIG. 4

INS
[100]

Final positioning
result

IMU
[110]

Calculation result
of the INS

Error correction

LiDAR
[130]

Positioning result of the
LiDAR

Compensation

Integrated filter [140]
(State variable: a position
error, a velocity error, an
attitude error, an
accelerometer zero
deviation and a gyroscope
zero deviation,
**a mounting deviation
angle between the IMU
and a GNSS antenna, and
a mounting deviation
angle between the IMU
and the LiDAR**

GNSS
[120]

Positioning result of
the GNSS

Compensation

FIG. 5

S101

Obtain a measurement result of an IMU

S102

Calculate the measurement result of the IMU, to obtain attitude information of an INS

S103

Construct an error model of a mounting deviation angle between the INS and a GNSS antenna based on the attitude information of the INS and attitude information of a GNSS

S104

Construct a system state equation, where a state variable of the system state equation includes the mounting deviation angle between the INS and the GNSS antenna

S107

Compensate for a positioning result of the GNSS based on the optimal estimation result of the mounting deviation angle between the IMU and the GNSS antenna

S105

Construct a system observation equation, where an observation member of the system observation equation includes an observation matrix corresponding to the mounting deviation angle that is between the INS and the GNSS antenna and that is determined based on the error model

Compensate for an inertial navigation calculation result based on an optimal estimation result of the state variable

S106

Perform filtering calculation on the system state equation and the system observation equation by using an integrated positioning filter, to obtain optimal estimation results of the mounting deviation angle between the IMU and the GNSS antenna and the state variable

S108

When a filtering calculation result of the integrated positioning filter converges, store the optimal estimation result of the mounting deviation angle between the IMU and the GNSS antenna in a configuration file as a calibration result

FIG. 6

S201

Obtain a measurement result of an IMU

S202

Calculate the measurement result of the IMU, to obtain attitude information of an INS

S203

Construct an error model of a mounting deviation angle between the INS and LiDAR based on the attitude information of the INS and attitude information of the LiDAR

S204

Construct a system state equation, where a state variable of the system state equation includes the mounting deviation angle between the INS and the LiDAR

S207

Compensate for a positioning result of the LiDAR based on the optimal estimation result of the mounting deviation angle between the IMU and the LiDAR

S205

Construct a system observation equation, where an observation member of the system observation equation includes an observation matrix corresponding to the mounting deviation angle that is between the INS and the LiDAR and that is determined based on the error model

Compensate for an inertial navigation calculation result based on an optimal estimation result of the state variable

S206

Perform filtering calculation on the system state equation and the system observation equation by using an integrated positioning filter, to obtain optimal estimation results of the mounting deviation angle between the IMU and the LiDAR and the state variable

S208

When a filtering calculation result of the integrated positioning filter converges, store the optimal estimation result of the mounting deviation angle between the IMU and the LiDAR in a configuration file as a calibration result

FIG. 7

Integrated positioning system

Inertial navigation calculation
module [310]

Error model construction
module [320]

System state equation
construction module [330]

System observation equation
construction module [340]

Filtering calculation module
[350]

FIG. 8

FIG. 9

EP 4 170 282 A1

Correct the inertial navigation
calculation result

IMU → Inertial navigation
calculation module
[310] → Output an integrated
positioning result

Inertial navigation
calculation result

LiDAR → Positioning result +
of the LiDAR
⊗
− Calculation → System state equation
construction module
[330] → System observation
equation construction
module
[340] → Filtering calculation
module [350]

Error model construction
module [320]

Compensate for the positioning
result of the LiDAR based on a
mounting deviation angle
between the IMU and the LiDAR

FIG. 10

<table>
<tr><td colspan="2">**INTERNATIONAL SEARCH REPORT**</td><td colspan="2">International application No.<br><br>**PCT/CN2021/083032**</td></tr>
</table>

| | |
|---|---|
| **A. CLASSIFICATION OF SUBJECT MATTER**<br><br>G01C 21/00(2006.01)i<br><br>According to International Patent Classification (IPC) or to both national classification and IPC | |

**B. FIELDS SEARCHED**

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNPAT, CNKI, WPI, EPODOC: 华为, 观测方程, 状态方程, 量测方程, 姿态, 滚转角, 偏差角, 转移, 俯仰角, 矩阵, 对准, 校准, SINS, GPS, GNSS, IMU, 惯导, 惯性导航, 导航, 角, 滤波, 定位, 传感, 标定, observat+, stat+, attitude, roll, angle, deviat+, transfer+, matrices, alignment, calibrat+, navigat+, angle, filter, position+, sens+

**C. DOCUMENTS CONSIDERED TO BE RELEVANT**

| Category* | Citation of document, with indication, where appropriate, of the relevant passages | Relevant to claim No. |
|---|---|---|
| X | CN 104977004 A (THE GENERAL DESIGNING INSTITUTE OF HUBEI SPACE TECHNOLOGY ACADEMY) 14 October 2015 (2015-10-14)<br>description, pages 1 and 3, and figure 1 | 1, 14, 19-21 |
| Y | CN 104977004 A (THE GENERAL DESIGNING INSTITUTE OF HUBEI SPACE TECHNOLOGY ACADEMY) 14 October 2015 (2015-10-14)<br>description, pages 1 and 3, and figure 1 | 2-13,15-18 |
| Y | CN 109556632 A (NORTH CHINA UNIVERSITY OF TECHNOLOGY) 02 April 2019 (2019-04-02)<br>description, pages 2-3 | 2-13,15-18 |
| A | CN 110849364 A (CHENGDU GLOBAL-WAY COMMUNICATION TECHNOLOGY CO., LTD.) 28 February 2020 (2020-02-28)<br>entire document | 1-21 |
| A | CN 103217159 A (GUO, Lei) 24 July 2013 (2013-07-24)<br>entire document | 1-21 |

☑ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **08 June 2021** | **23 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2021/083032** |

### C. DOCUMENTS CONSIDERED TO BE RELEVANT

| Category* | Citation of document, with indication, where appropriate, of the relevant passages | Relevant to claim No. |
|---|---|---|
| A | CN 104406605 A (THE 10TH RESEARCH INSTITUTE OF CHINA ELETRONIC TECHNOLOGY GROUP CORPORATION) 11 March 2015 (2015-03-11) entire document | 1-21 |
| A | CN 105509738 A (NORTHWESTERN POLYTECHNICAL UNIVERSITY) 20 April 2016 (2016-04-20) entire document | 1-21 |
| A | US 2013138264 A1 (HOSHIZAKI TAKAYUKI) 30 May 2013 (2013-05-30) entire document | 1-21 |

Form PCT/ISA/210 (second sheet) (January 2015)

**INTERNATIONAL SEARCH REPORT**
Information on patent family members

| International application No. |
| --- |
| **PCT/CN2021/083032** |

| Patent document cited in search report | | | Publication date (day/month/year) | Patent family member(s) | | | Publication date (day/month/year) |
| --- | --- | --- | --- | --- | --- | --- | --- |
| CN | 104977004 | A | 14 October 2015 | CN | 104977004 | B | 18 August 2017 |
| CN | 109556632 | A | 02 April 2019 | CN | 109556632 | B | 29 January 2021 |
| CN | 110849364 | A | 28 February 2020 | None | | | |
| CN | 103217159 | A | 24 July 2013 | CN | 103217159 | B | 20 January 2016 |
| CN | 104406605 | A | 11 March 2015 | CN | 104406605 | B | 06 June 2017 |
| CN | 105509738 | A | 20 April 2016 | CN | 105509738 | B | 29 June 2018 |
| US | 2013138264 | A1 | 30 May 2013 | US | 9026263 | B2 | 05 May 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010636730